# EUROPEAN PATENT APPLICATION

(11) **EP 4 543 033 A1**
(43) Date of publication of application: **23.04.2025**
(21) Application number: 23850217.3
(22) Date of filing: 23.05.2023
(51) Int. Cl.: H04N 23/73, H04N 23/71, H04N 5/77, H04N 23/54, H04N 17/00, H04N 5/915, H04N 13/271

(54) **ELECTRONIC DEVICE PERFORMING AUTO EXPOSURE CONTROL, CONTROL METHOD THEREFOR, AND RECORDING MEDIUM HAVING COMPUTER PROGRAM RECORDED THEREON**

(30) Priority: 04.08.2022 KR 20220097569
(71) Applicant: Samsung Electronics Co., Ltd., Suwon-si, Gyeonggi-do 16677 (KR)
(72) Inventor: NGUYEN VAN, Khanh, Suwon-si, Gyeonggi-do 16677 (KR); NHU DINH VIET, Anh, Suwon-si, Gyeonggi-do 16677 (KR); VU DUC, Cuong, Suwon-si, Gyeonggi-do 16677 (KR); BUI NGOC, Minh, Suwon-si, Gyeonggi-do 16677 (KR); NGUYEN VAN, Chat, Suwon-si, Gyeonggi-do 16677 (KR); NGUYEN VAN, Thinh, Suwon-si, Gyeonggi-do 16677 (KR)
(74) Representative: Gulde & Partner
(86) International application number: PCT/KR2023/007023
(87) International publication number: WO 2024/029706

(57) **Abstract**

A method of controlling an electronic device including a camera is provided. The method of controlling the electronic device includes obtaining an image frame from the camera. Furthermore, the method of controlling the electronic device includes identifying whether a current frame rate is lower than a reference frame rate. Furthermore, the method of controlling the electronic device includes, based on determining that the current frame rate is lower than the reference frame rate, identifying whether a brightness value of the image frame obtained from an image sensor is lower than a reference brightness value. Furthermore, the method of controlling the electronic device includes, based on determining that the brightness value of the image frame is lower than the reference brightness value, determining whether the camera corresponds to a first state in which the camera is blocked by an obstacle. Furthermore, the method of controlling the electronic device includes, based on determining that the camera corresponds to the first state, changing exposure settings of the camera to first exposure settings.

## Description

### Technical Field

Embodiments of the present disclosure relate to an electronic device for performing auto exposure control, a method of controlling the electronic device, and a recording medium having recorded thereon a computer program for performing the method of controlling the electronic device.

### Background Art

Through auto exposure control, a camera determines exposure settings when capturing an image. The camera sets operation parameters of components, such as an aperture, an image sensor, and a shutter included in the camera, by using the exposure settings determined through the auto exposure control, and performs image capturing. Because auto exposure control is performed in response to illuminance that changes in real time, the camera performs auto exposure control based on image frames being input in real time. Therefore, auto exposure control is performed in real time in response to changes in a shooting environment, and the camera continuously changes exposure settings as the shooting environment changes.

### Disclosure

### Technical Solution

According to an aspect of the present disclosure, there is provided a method of controlling an electronic device including a camera. The method of controlling the electronic device includes obtaining an image frame from the camera. Furthermore, the method of controlling the electronic device includes identifying whether a current frame rate is lower than a reference frame rate. Furthermore, the method of controlling the electronic device includes, based on determining that the current frame rate is lower than the reference frame rate, identifying whether a brightness value of the image frame obtained from an image sensor is lower than a reference brightness value. Furthermore, the method of controlling the electronic device includes, based on determining that the brightness value of the image frame is lower than the reference brightness value, determining whether the camera corresponds to a first state in which the camera is blocked by an obstacle. Furthermore, the method of controlling the electronic device includes, based on determining that the camera corresponds to the first state, changing exposure settings of the camera to first exposure settings.

According to an aspect of the present disclosure, an electronic device is provided. The electronic device includes a camera including an image sensor. Furthermore, the electronic device includes a memory storing at least one instruction. Furthermore, the electronic device includes at least one processor connected to the memory. The at least one processor is configured to execute the at least one instruction to obtain an image frame from the camera. Furthermore, the at least one processor is configured to identify whether a current frame rate is lower than a reference frame rate. Furthermore, the at least one processor is configured to, based on determining that the current frame rate is lower than the reference frame rate, identify whether a brightness value of the image frame obtained from the image sensor is lower than a reference brightness value. Furthermore, the at least one processor is configured to, based on determining that the brightness value of the image frame is lower than the reference brightness value, determine whether the camera corresponds to a first state in which the camera is blocked by an obstacle. Furthermore, the at least one processor is configured to, based on determining that the camera corresponds to the first state, change exposure settings of the camera to first exposure settings.

According to an aspect of the present disclosure, there is provided a computer-readable recording medium having recorded thereon a computer program for performing, on a computer, a method of controlling an electronic device including a camera.

### Description of Drawings

FIG. 1 is a diagram illustrating an operation of an electronic device according to an embodiment of the present disclosure.
FIG. 2 is a diagram illustrating a structure of an electronic device according to an embodiment of the present disclosure.
FIG. 3 is a flowchart of a method of controlling an electronic device, according to an embodiment of the present disclosure.
FIG. 4 is a flowchart of a method of controlling an electronic device, according to an embodiment of the present disclosure.
FIG. 5 is a diagram illustrating a process of determining whether exposure settings for an image frame are appropriate, according to an embodiment of the present disclosure.
FIG. 6 is a diagram illustrating an operation in which exposure settings and a brightness value of an image frame are stored in a buffer, according to an embodiment of the present disclosure.
FIG. 7 is a diagram illustrating a process of determining whether a state of an electronic device corresponds to a first state, according to an embodiment of the present disclosure.
FIG. 8 is a diagram illustrating a process of determining whether buffer data is valid, according to an embodiment of the present disclosure.
FIG. 9 is a diagram illustrating an example of valid buffer data and an example of invalid buffer data, according to an embodiment of the present disclosure.
FIG. 10 is a diagram illustrating a process of determining first exposure settings according to an embodiment of the present disclosure.
FIG. 11 is a diagram illustrating a process of determining first exposure settings according to an embodiment of the present disclosure.
FIG. 12 illustrates an effect of controlling exposure settings, according to an embodiment of the present disclosure.
FIG. 13 is a block diagram illustrating a structure of an electronic device according to an embodiment of the present disclosure.
FIG. 14 is a diagram illustrating the arrangement of a camera, a proximity sensor, and a time of flight (ToF) camera in an electronic device, according to an embodiment of the present disclosure.
FIG. 15 is a diagram illustrating a protective case of an electronic device, according to an embodiment of the present disclosure.
FIG. 16 is a block diagram illustrating a structure of an electronic device according to an embodiment of the present disclosure.
FIG. 17 is a diagram illustrating a configuration for determining a first state of an electronic device based on image frame data, according to an embodiment of the present disclosure.
FIG. 18 is a block diagram illustrating a structure of an electronic device according to an embodiment of the present disclosure.
FIG. 19 is a diagram illustrating a structure of an electronic device according to an embodiment of the present disclosure.
FIG. 20 is a diagram illustrating a structure of an electronic device according to an embodiment of the present disclosure.
FIG. 21 is a block diagram illustrating a structure of an electronic device according to an embodiment of the present disclosure.
FIG. 22 is a diagram illustrating a result of auto exposure control according to an embodiment of the present disclosure.
FIG. 23 is a block diagram illustrating a structure of an electronic device according to an embodiment of the present disclosure.
FIG. 24 is a flowchart illustrating a process of determining first exposure settings based on an illuminance value, according to an embodiment of the present disclosure.
FIG. 25 is a flowchart of a method of controlling an electronic device, according to an embodiment of the present disclosure.
FIG. 26 is a diagram showing changes in ambient illuminance, International Organization for Standardization (ISO), and an image frame brightness value, according to a comparative example of the present disclosure.
FIG. 27 is a diagram illustrating changes in ambient illuminance, ISO, and an image frame brightness value, according to an embodiment of the present disclosure.
FIG. 28 is a diagram illustrating image frames according to a comparative example and an embodiment of the present disclosure.
FIG. 29 is a block diagram of an electronic device in a network environment, according to an embodiment of the present disclosure.
FIG. 30 is a block diagram illustrating a camera module according to an embodiment of the present disclosure.

### Mode for Invention

The present specification describes and discloses principles of embodiments to clarify the scope of the claims and to enable one of ordinary skill in the art to implement the embodiments set forth in the claims. The embodiments of the disclosure may be implemented in various forms.

Like reference numerals denote like elements throughout. The present specification does not describe all components in the embodiments, and common knowledge in the art or the same descriptions of the embodiments will be omitted below. Terms such as "module" and "unit" used herein may be implemented using one or any combination of two or more of software, hardware, and firmware, and according to embodiments, a plurality of "modules" or "units" may be implemented as a single unit or element, or a single "module" or "unit" may include a plurality of elements.

In describing an embodiment, when it is determined that detailed descriptions of related known technologies may unnecessarily obscure the essence of the present disclosure, the detailed descriptions thereof will be omitted. Furthermore, numbers (e.g., a first, a second, etc.) used in the description of the specification are merely identification symbols for distinguishing one element from another.

In addition, throughout the specification, when a component is referred to as being "connected" or "coupled" to another component, it should be understood that the component may be directly connected or coupled to the other component, but may also be connected or coupled to the other component via another intervening component therebetween unless there is a particular description contrary thereto.

Hereinafter, the operating principles and various embodiments of the present disclosure are described in detail with reference to the accompanying drawings.

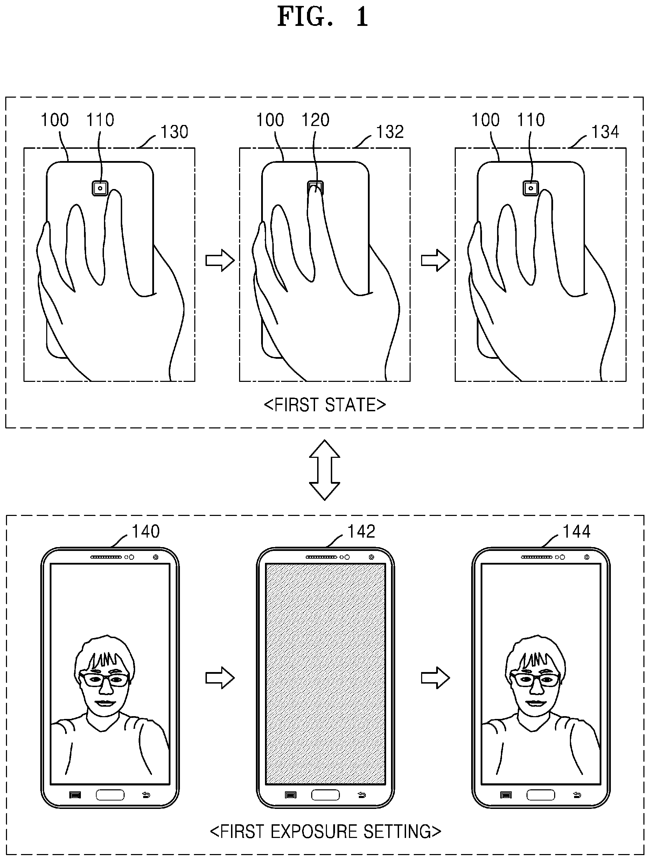

FIG. 1 is a diagram illustrating an operation of an electronic device according to an embodiment of the present disclosure.

The embodiments of the present disclosure relate to an electronic device 100 having a camera 110. When the electronic device 100 is equipped with the camera 110, the camera 110 is positioned at a predetermined location on the electronic device 100. When the electronic device 100 operates in a shooting mode, the camera 110 consecutively generates image frames at a predetermined frame rate.

While operating in the shooting mode, a situation may occur where the camera 110 positioned at the predetermined location is blocked by an obstacle. For example, when a user holds the electronic device 100 in his hand and blocks the camera 110 with a finger or the like, the camera 110 is blocked by the obstacle. In another example, while the electronic device 100 is operating in the shooting mode, when the electronic device 100 is placed on a table or the like with the camera 110 facing the floor, the camera 110 is blocked by the obstacle.

When the camera 110 is blocked by an obstacle, an image frame is generated while the camera 110 is blocked by the obstacle. In this case, the electronic device 100 performs auto exposure control based on the image frame generated with the camera 110 blocked by the obstacle. The auto exposure control is an operation of changing exposure settings of the camera 110 based on the captured image frame. The exposure settings include, for example, shutter speed, aperture value, and ISO value.

When the camera 110 is blocked by an obstacle, a brightness value of an image frame is changed, and exposure settings are determined based on the changed brightness value. However, the image frame captured while the camera 110 is blocked by the obstacle does not reflect an actual surrounding environment. Furthermore, when the electronic device 100 adjusts the exposure settings by performing auto exposure control while the camera 110 is blocked by the obstacle, and then the obstacle is removed, the electronic device 100 does not immediately reflect the surrounding environment. For this reason, a delay occurs when the electronic device 100 performs auto exposure control by reflecting illuminance that has changed due to the obstacle being removed. This results in degradation of the quality of the captured image after the removal of the obstacle and a delay in resuming image capturing after the auto exposure control is completed.

According to an embodiment of the present disclosure, the electronic device 100 provides improved auto exposure control by quickly compensating exposure settings after the camera is obstructed by an obstacle and then the obstacle is removed. According to an embodiment, the electronic device 100 may quickly operate with exposure settings adjusted according to the surrounding environment after the obstacle is removed by using exposure settings for an image frame before the camera 110 is blocked by the obstacle.

As shown in FIG. 1, a case in which the camera 110 of the electronic device 100 is blocked by a user's finger is assumed and described.

In operation 130, the user holds the electronic device 100 in his hand and takes a photo. In operation 130, because the camera 110 is not obstructed by an obstacle, an image frame 140 is generated in a normal state.

Next, in operation 132, the user covers the camera 110 of the electronic device 100 with a finger 120. The finger 120 corresponds to an obstacle. Because the camera 110 is covered by the finger 120, an image frame 142 captured with the camera 110 blocked is generated. According to an embodiment of the present disclosure, the electronic device 100 changes exposure settings to first exposure settings in a first state in which the camera 110 is blocked by the obstacle. The first exposure settings may be determined by a predetermined rule. The first exposure settings may be determined based on exposure settings before the electronic device 100 operates in the first state. Therefore, the first exposure settings reflect an environmental condition prior to the electronic device 100 operating in the first state.

Next, in operation 134, the user removes the finger 120 from the camera 110 of the electronic device 100, so that the camera 110 operates without an obstacle. According to an embodiment of the present disclosure, at a time point when the obstacle is removed, the electronic device 100 operates with the first exposure settings that reflect the environmental condition prior to the electronic device 100 operating in the first state. Therefore, when the environmental condition has not changed significantly before and after entering the first state, the first exposure settings reflect the environmental condition immediately after the obstacle is removed. As a result, according to an embodiment of the present disclosure, the electronic device 100 may operate by quickly reflecting the environmental condition after the camera 110 is obstructed by an obstacle and then the obstacle is removed.

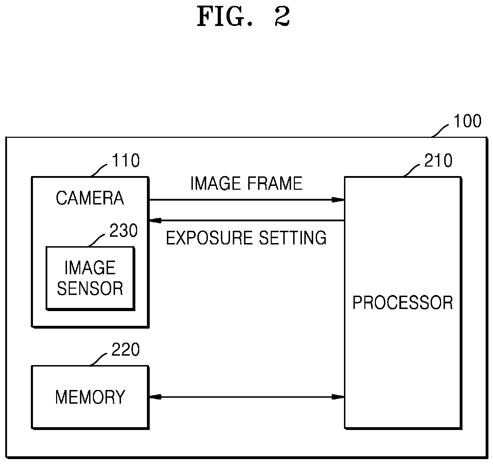

FIG. 2 is a diagram illustrating a structure of an electronic device according to an embodiment of the present disclosure.

According to an embodiment of the present disclosure, the electronic device 100 may be implemented in various forms. For example, the electronic device 100 may include at least one of a smartphone, a tablet personal computer (PC), a mobile phone, a video phone, an e-book reader, a desktop PC, a laptop PC, a netbook computer, a workstation, a server, a personal digital assistant (PDA), a portable multimedia player (PMP), an MP3 player, a mobile medical device, a camera, a wearable device, or a flexible device. According to various embodiments, the wearable device may include at least one of an accessory type device (e.g., a watch, a ring, a bracelet, an anklet, a necklace, eyeglasses, contact lenses, or a head-mounted device (HMD)), a textile- or clothing-integrated type device (e.g., electronic clothing), a body-attached type device (e.g., a skin pad or a tattoo), or a bio-implantable type device (e.g., an implantable circuit).

In addition, according to an embodiment of the present disclosure, the electronic device 100 may be a home appliance. The home appliance may include at least one of, for example, a television (TV), a digital video disk (DVD) player, an audio player, a refrigerator, an air conditioner, a vacuum cleaner, an oven, a microwave oven, a washing machine, an air purifier, a set-top box, a home automation control panel, a security control panel, a TV box, a game console, an electronic dictionary, an electronic key, a camcorder, or an electronic picture frame.

According to an embodiment of the present disclosure, the electronic device 100 includes a camera 110, a processor 210, and a memory 220.

The camera 110 may be configured as one or a plurality of cameras. According to an embodiment, the camera 110 is positioned on one side of the electronic device 100. Furthermore, according to an embodiment, the electronic device 100 includes the camera 110 positioned on a front side and the camera 110 positioned on a rear side.

The camera 110 includes an image sensor 230. The image sensor 230 performs photoelectric conversion on incident light to generate image frame data corresponding to electrical signals. The image sensor 230 may correspond to, for example, a charge coupled device (CCD)image sensor.

The camera 110 also includes at least one a lens, a lens driver, an aperture, an aperture driver, a shutter, or a shutter driver, or a combination thereof.

In addition, the camera 110 may be a combination of a plurality of cameras arranged on one side. For example, the camera 110 may include at least one of an ultra-wide-angle camera, a wide-angle camera, a telephoto camera, or a zoom camera, or a combination thereof.

The processor 210 controls all operations of the electronic device 100. The processor 210 may be implemented as one or more processors. The processor 210 may execute program code or one or more instructions stored in the memory 220. The processor 210 may be composed of hardware components that perform arithmetic, logic, and input/output (I/O) operations, and signal processing. The processor 210 may include at least one of, for example, a central processing unit (CPU), a microprocessor, a graphics processing unit (GPU), an application processor (AP), an application specific integrated circuits (ASICs), digital signal processors (DSPs), digital signal processing devices (DSPDs), programmable logic devices (PLDs), and field programmable gate arrays (FPGAs), but is not limited thereto. In addition, the processor 210 may include a neural processing unit (NPU) that performs operation of an artificial intelligence (AI) model.

The memory 220 may store data and instructions necessary for operation of the electronic device 100. The memory 220 may be implemented as at least one of a volatile storage medium or a nonvolatile storage medium, or a combination thereof. For example, the memory 220 may be configured as a non-volatile memory including at least one of a flash memory, a hard disk, a multimedia card micro-type memory, read-only memory (ROM), electrically erasable programmable ROM (EEPROM), or PROM. In an embodiment, the memory 220 may be an embedded Multi Media Card (eMMC).

While the electronic device 100 operates in a shooting mode, the camera 110 generates image frames at a predetermined frame rate. The processor 210 may determine a frame rate based on auto exposure control. The processor 210 may set a frame rate to be higher as the illuminance increases. The processor 210 stores the image frames generated by the camera 110 in the memory 220. For example, the memory 220 includes a buffer, and the processor 210 stores the image frames in the buffer.

The processor 210 identifies whether a current frame rate is lower than a reference frame rate. The current frame rate is a value corresponding to a frame rate at which the camera 110 generates image frames from the image sensor 230, and refers to a currently set frame rate value. The reference frame rate is a preset reference value.

The processor 210 determines whether the current frame rate is lower than the reference frame rate. Based on determining that the current frame rate is lower than the reference frame rate, the processor 210 determines whether a brightness value of an image frame obtained from the image sensor 230 is lower than a reference brightness value. The processor 210 obtains an image frame from the image sensor 230 or a buffer, and calculates a brightness value of the image frame. The brightness value of the image frame may correspond to an average of brightness values of pixels in the image frame. The reference brightness value corresponds to a preset reference value. The processor 210 determines whether the brightness value of the image frame is lower than the reference brightness value by comparing the brightness value of the image frame with the reference brightness value.

Based on determining that the brightness value of the image frame is lower than the reference brightness value, the processor 210 determines whether a state of the electronic device 100 corresponds to the first state in which the camera 110 is blocked by an obstacle. The processor 210 may determine whether the state of the electronic device 100 corresponds to the first state by using various methods. According to an embodiment, the processor 210 may determine whether the state of the electronic device 100 corresponds to the first state based on a detection value of a proximity sensor. According to an embodiment, the processor 210 may determine whether the state of the electronic device 100 corresponds to the first state by using a depth map obtained by a time of flight (ToF) camera. According to an embodiment, the processor 210 may determine whether the state of the electronic device 100 corresponds to the first state by using state information obtained from a protective case coupled to the electronic device 100. According to an embodiment, the processor 210 may determine whether the state of the electronic device 100 corresponds to the first state based on a focus state of the camera 110. According to an embodiment, the processor 210 may determine whether the state of the electronic device 100 corresponds to the first state based on image data of the obtained image frame. According to an embodiment, the processor 210 may determine whether the state of the electronic device 100 corresponds to the first state based on a detection value of an acceleration sensor. According to an embodiment, the processor 210 may determine whether the state of the electronic device 100 corresponds to the first state based on a folding angle of a foldable device. Various methods of determining whether the state of the electronic device 100 is the first state are described in more detail below.

Based on determining that the state of the electronic device 100 corresponds to the first state, the processor 210 changes exposure settings of the camera 110 to first exposure settings. When it is determined that the state of the electronic device 100 corresponds to the first state, the camera 110 is blocked by an obstacle. Therefore, the image frame obtained from the camera 110 does not reflect a surrounding environment. In the first state, the processor 210 sets the first exposure settings as exposure instead of calculating the exposure settings based on the obtained image frame. According to an embodiment, the first exposure settings may be determined based on exposure settings before the state of the electronic device 100 is determined to be the first state. Each time the processor 210 obtains an image frame from the image sensor 230, the processor 210 stores in the buffer exposure settings and a brightness value corresponding to each image frame. The buffer stores exposure settings and brightness values for a predetermined number of latest image frames. According to an embodiment, exposure settings for an image frame corresponding to a highest brightness value among the values stored in the buffer may be determined as the first exposure settings. According to an embodiment, the processor 210 may calculate an average of the brightness values of the image frames stored in the buffer, and determine exposure settings for an image frame having a brightness value closest to the average of the brightness values as the first exposure settings. According to an embodiment, the processor 210 may obtain exposure settings corresponding to an ambient brightness value from a first database, and determine the obtained exposure settings as the first exposure settings. Various methods of determining first exposure settings are described in more detail below.

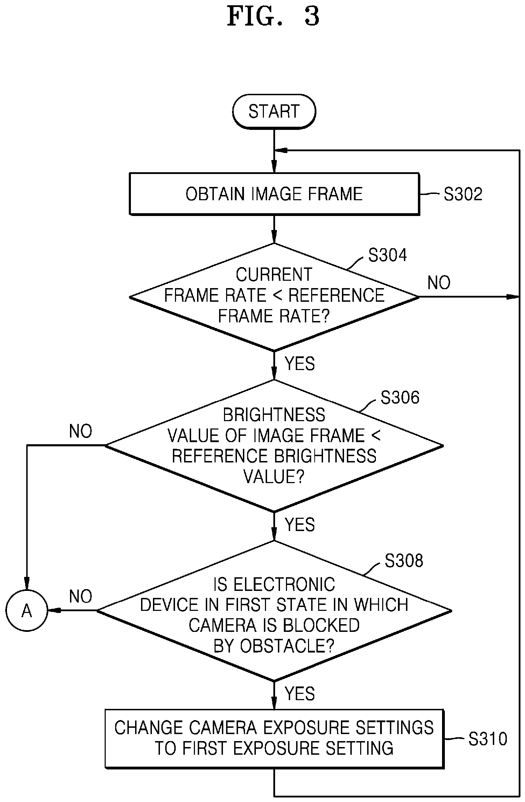

FIG. 3 is a flowchart of a method of controlling an electronic device, according to an embodiment of the present disclosure.

Each operation in a method of controlling an electronic device of the present disclosure may be performed by various forms of electronic devices including a processor and a camera. The present disclosure is described mainly with respect to an embodiment in which the electronic device 100 according to embodiments of the present disclosure performs a method of controlling an electronic device. Accordingly, the embodiments described for the electronic device 100 are applicable to embodiments for a method of controlling an electronic device, and conversely, embodiments described for a method of controlling an electronic device are applicable to embodiments for the electronic device 100. Methods of controlling an electronic device according to the disclosed embodiments are not limited to being performed by the electronic device 100 disclosed herein, but may be performed by various forms of electronic devices.

In operation S302, the electronic device 100 obtains an image frame from the camera 110. The electronic device 100 stores the image frame, a brightness value of the image frame, and exposure settings for the image frame in a buffer.

Next, in operation S304, the electronic device 100 determines whether a current frame rate is lower than a reference frame rate.

When the current frame rate is higher than or equal to the reference frame rate, the electronic device 100 performs an operation of obtaining a next image frame in operation S302.

When the current frame rate is lower than the reference frame rate, in operation S306, the electronic device 100 determines whether a brightness value of the image frame is lower than a reference brightness value. The brightness value of the image frame is an average of brightness values of pixels in the image frame.

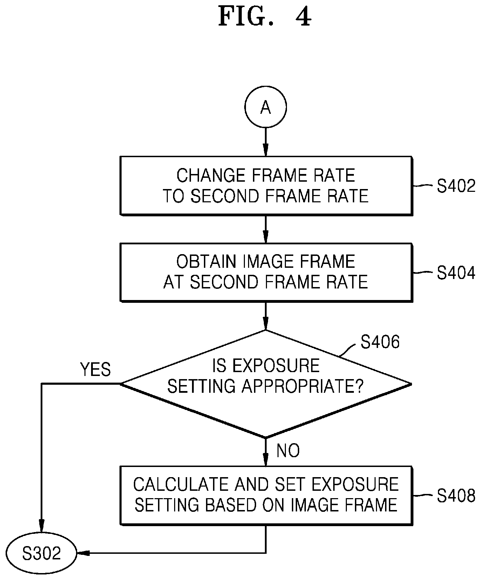

When the brightness value of the image frame is higher than or equal to the reference brightness value, the electronic device 100 performs process A. Process A is described with reference to FIG. 4.

When the brightness value of the image frame is lower than the reference brightness value, in operation S308, the electronic device 100 determines whether a state of the electronic device 100 corresponds to a first state in which the camera 110 is blocked by an obstacle. According to an embodiment, the electronic device 100 may determine whether a state thereof corresponds to the first state based on a detection value of a proximity sensor. According to an embodiment, the electronic device 100 may determine whether a state thereof corresponds to the first state by using a depth map obtained by a ToF camera. According to an embodiment, the electronic device 100 may determine whether a state thereof corresponds to the first state by using state information obtained from a protective case coupled to the electronic device 100. According to an embodiment, the electronic device 100 may determine whether a state thereof corresponds to the first state based on a focus state of the camera 110. According to an embodiment, the electronic device 100 may determine whether a state thereof corresponds to the first state based on image data of the obtained image frame. According to an embodiment, the electronic device 100 may determine whether a state thereof corresponds to the first state based on a detection value of an acceleration sensor. According to an embodiment, the electronic device 100 may determine whether a state thereof corresponds to the first state based on a folding angle of a foldable device. Various methods of determining whether the state of the electronic device 100 is the first state are described in more detail below.

The electronic device 100 may determine whether a state thereof corresponds to the first state by using the various methods described above. The electronic device 100 may use at least one of the various methods described above, or a combination thereof. When the electronic device 100 determines whether a state thereof corresponds to the first state by using a plurality of methods, the electronic device 100 determines that the state thereof corresponds to the first state when itis determined by at least one of the plurality of methods that the state thereof corresponds to the first state .

When the state of the electronic device 100 does not correspond to the first state, the electronic device 100 performs process A. The process A is described with reference to FIG. 4.

When the state of the electronic device 100 corresponds to the first state, in operation S310, the electronic device 100 changes exposure settings of the camera 110 to first exposure settings. According to an embodiment, the first exposure settings may be determined based on exposure settings applied before the state of the electronic device 100 is determined to be the first state. Each time the electronic device 100 obtains an image frame from the image sensor 230, the electronic device 100 stores in the buffer exposure settings and a brightness value corresponding to the corresponding image frame. The buffer stores exposure settings and brightness values for a predetermined number of latest image frames. According to an embodiment, exposure settings for an image frame corresponding to a highest brightness value among the values stored in the buffer may be determined as the first exposure settings. According to an embodiment, the electronic device 100 may calculate an average of the brightness values of the image frames stored in the buffer, and determine exposure settings for an image frame having a brightness value closest to the average of the brightness values as the first exposure settings. According to an embodiment, the processor 210 may obtain exposure settings corresponding to an ambient brightness value from a first database, and determine the obtained exposure settings as the first exposure settings. Various methods of determining first exposure settings are described in more detail below.

When the electronic device 100 changes the exposure settings of the camera 110 to the first exposure settings in operation S310, the electronic device 100 obtains a next image frame in operation S302, and repeats the subsequent operations.

FIG. 4 is a flowchart of a method of controlling an electronic device, according to an embodiment of the present disclosure.

FIG. 4 illustrates operations of the process A described with reference to FIG. 3. When the brightness value of the image frame is higher than or equal to the reference brightness value, the electronic device 100 performs the process A. Furthermore, when the state of the electronic device 100 does not correspond to the first state, the electronic device 100 performs the process A.

In the process A, the electronic device 100 changes the frame rate to a second frame rate in operation S402. According to an embodiment, the second frame rate is a preset value, and is a frame rate higher than the reference frame rate. The electronic device 100 obtains image frames by increasing the frame rate to the second frame rate in operation S402. When the electronic device 100 changes the frame rate, it transmits information indicating a change in the frame rate to an application layer.

Next, in operation S404, the electronic device 100 obtains an image frame at the second frame rate. The electronic device 100 obtains an image frame from the image sensor 230 at the second frame rate.

Next, in operation S406, the electronic device 100 determines whether exposure settings of the obtained image frame are appropriate. The electronic device 100 may determine whether the exposure settings of the obtained image frame is appropriate based on a distribution of pixel brightness values for the obtained image frame.

Based on determining that the exposure settings are not appropriate, in operation S408, the electronic device 100 calculates exposure settings based on the image frame obtained at the second frame rate. The electronic device 100 may calculate the exposure settings based on an auto exposure control algorithm. When the electronic device 100 determines that underexposure has occurred, the electronic device 100 may perform at least one of decreasing a shutter speed, increasing an ISO value, or increasing an aperture value, or a combination thereof. When the electronic device determines that overexposure has occurred, the electronic device 100 may perform at least one of increasing a shutter speed, decreasing an ISO value, or decreasing an aperture value, or a combination thereof.

The electronic device 100 changes the current exposure settings to the exposure settings calculated based on the image frame obtained at the second frame rate. When the exposure settings are changed, the electronic device 100 obtains a next image frame in operation S302 and repeats the subsequent operations.

When the exposure settings are determined to be appropriate, the electronic device 100 obtains the next image frame in operation S302 and repeats the subsequent operations.

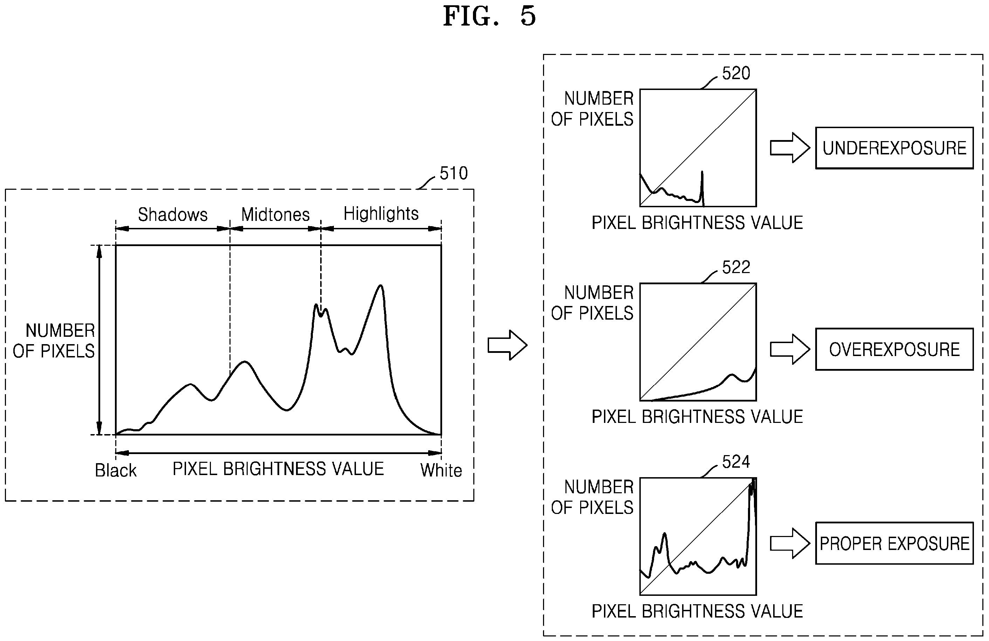

FIG. 5 is a diagram illustrating a process of determining whether exposure settings for an image frame are appropriate, according to an embodiment of the present disclosure.

The process of determining whether exposure settings for an image frame are appropriate in FIG. 5 may correspond to operation S406 of FIG. 4.

A graph 510 is a histogram representing the number of pixel brightness values of an image frame. A horizontal axis of the graph 510 represents pixel brightness values. The horizontal axis corresponds to higher brightness values from left to right. A vertical axis of the graph 510 represents the number of pixels. The horizontal axis of the graph 510 represents 256 brightness values from 0 to 255.

According to an embodiment of the present disclosure, the processor 210 may determine whether exposure settings for the image frame are proper, based on the histogram of pixel brightness values of the image frame. The processor 210 identifies, from the histogram of pixel brightness values, a distribution of the pixel brightness values, and determines whether exposure is proper based on the distribution of the pixel brightness values. The processor 210 sets a plurality of intervals of pixel brightness values in the histogram of pixel brightness values. For example, the plurality of intervals of brightness values may include shadows, midtones, and highlights. The shadows represent a low brightness interval, midtones represent a medium brightness interval, and highlights represent a high brightness interval.

According to an embodiment, the processor 210 determines whether the exposure settings for the image frame is appropriate based on a ratio of pixel brightness values for each of the plurality of intervals. The ratio of pixel brightness values is a ratio of the number of pixels in the corresponding interval to the total number of pixels. When a distribution ratio of pixel brightness values of the shadows exceeds a reference brightness distribution value, the processor 210 determines that underexposure occurs. When a distribution ratio of the pixel brightness values of the highlights exceeds a reference brightness distribution value, the processor 210 determines that overexposure occurs. The processor 210 determines that proper exposure occurs when the distribution ratio of the pixel brightness values in the shadows and the distribution ratio of the pixel brightness values in the highlights are both less than or equal to the reference brightness distribution value.

According to an embodiment, the processor 210 determines whether the exposure settings for the image frame are appropriate, based on whether the number of pixels having a lowest brightness value or a highest brightness value exceeds a reference value. The processor 210 determines that underexposure occurs when the number of pixels with the lowest brightness value exceeds the reference value, as shown in graph 520. The processor 210 determines that overexposure occurs when the number of pixels with the highest brightness value exceeds the reference value, as shown in graph 522. The processor 210 determines that proper exposure occurs when the number of pixels with the lowest brightness value and the number of pixels with the highest brightness value are both less than or equal to the reference value, as shown in graph 524.

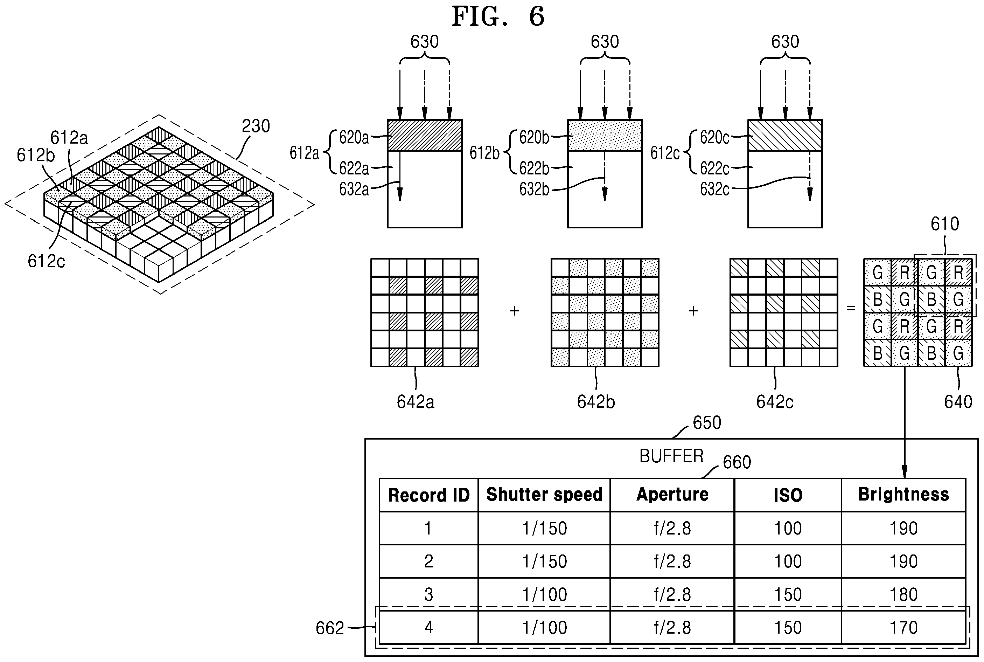

FIG. 6 is a diagram illustrating an operation in which exposure settings and a brightness value of an image frame are stored in a buffer, according to an embodiment of the present disclosure.

According to an embodiment of the present disclosure, each time an image frame is generated, the processor 210 stores a brightness value and exposure settings for each image frame in a buffer 650. The buffer 650 may be included in the memory 220.

When the processor 210 starts a shooting mode (e.g., a camera session), it generates a shooting information table 660 in the buffer 650. The shooting information table 660 may include a record identifier (ID), a shutter speed, an aperture value, an ISO value, and a brightness value. Each time the processor 210 obtains an image frame from the image sensor 230, the processor 210 may obtain exposure settings and an image frame brightness value for the obtained image frame and add them to the shooting information table 660. When new data is generated, it is added to a last row of the shooting information table 660. The shooting information table 660 maintains a predetermined number of rows. When the number of rows of the shooting information table 660 reaches a predetermined number, the buffer 650 may delete a first row when a new row is added.

The image sensor 230 includes a plurality of sub-pixels 612a, 612b, and 612c. The plurality of sub-pixels 612a, 612b, and 612c may each correspond to a predetermined color component. A pixel 610 of the image sensor 230 includes a plurality of sub-pixels 612a, 612b, and 612c having a predetermined color pattern. The plurality of sub-pixels 612a, 612b, and 612c respectively include filler layers 620a, 620b, and 620c and sensor arrays 622a, 622b, and 622c. The filter layers 620a, 620b, and 620c respectively correspond to color filters that correspond to color components of the corresponding sub-pixels 612a, 612b, and 612c. The sensor arrays 622a, 622b, and 622c generate electrical raw data by respectively photoelectrically converting the filtered optical signals 632a, 632b, and 632c incident through the color filters into electrical signals. The color filters filter incident light 630 and respectively transmit the optical signals 632a, 632b, 632c of color components corresponding to the color filters to the sensor arrays 622a, 622b, and 622c.

The image sensor 230 generates raw data 642a, 642b, and 642c of the respective color components . The processor 210 generates raw data 640 corresponding to an image frame by synthesizing the raw data 642a, 642b, and 642c of the respective color components. The processor 210 generates the raw data 640 corresponding to each image frame. The processor 210 calculates an image frame brightness value from the raw data 640 of an image frame or data obtained by post-processing the raw data 640. In addition, the processor 210 obtains exposure settings set when capturing each image frame. The processor 210 adds an image frame brightness value and set exposure settings for each image frame to the shooting information table 660.

Auto exposure control is closed-loop control. The auto exposure control is repeatedly performed each time an image frame is generated. Therefore, when an image frame is generated, auto exposure control for a next image frame may be performed based on a previous image frame in a closed loop. For example, the processor 210 performs auto exposure control for a next image frame based on a value in a last row 662 of the shooting information table 660.

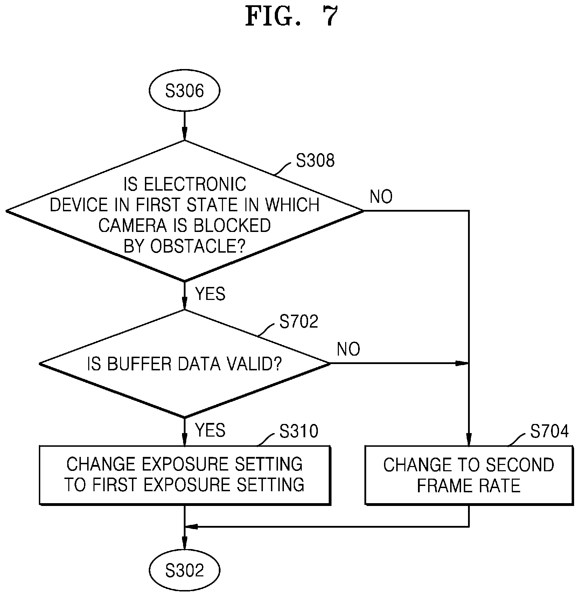

FIG. 7 is a diagram illustrating a process of determining whether a state of an electronic device corresponds to a first state, according to an embodiment of the present disclosure.

According to an embodiment of the present disclosure, when the state of the electronic device 100 corresponds to the first state, the electronic device 100 further determines whether buffer data is valid. The buffer data corresponds to the shooting information table 660 described above. According to an embodiment, when the buffer data is valid, the electronic device 100 increases exposure by setting exposure settings to the first exposure settings in the first state. On the other hand, when the buffer data is invalid, the electronic device 100 increases a frame rate instead of increasing the exposure in the first state. According to an embodiment of the present disclosure, when the buffer data is invalid, the electronic device 100 increases the frame rate instead of increasing the exposure in the first state, thereby providing an effect of preventing overexposure.

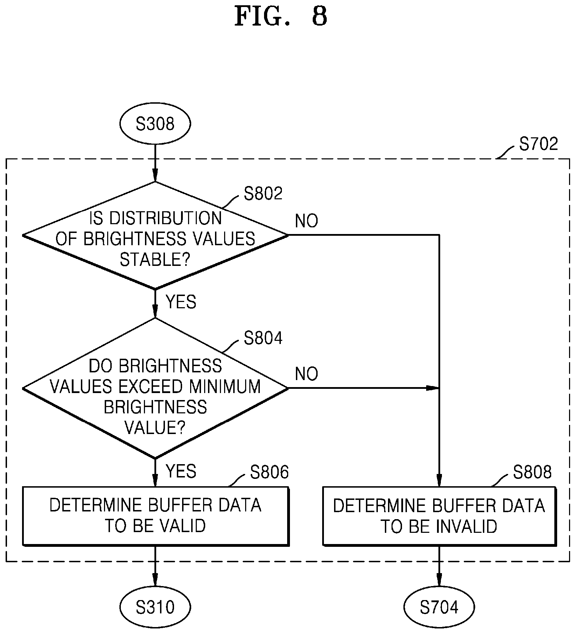

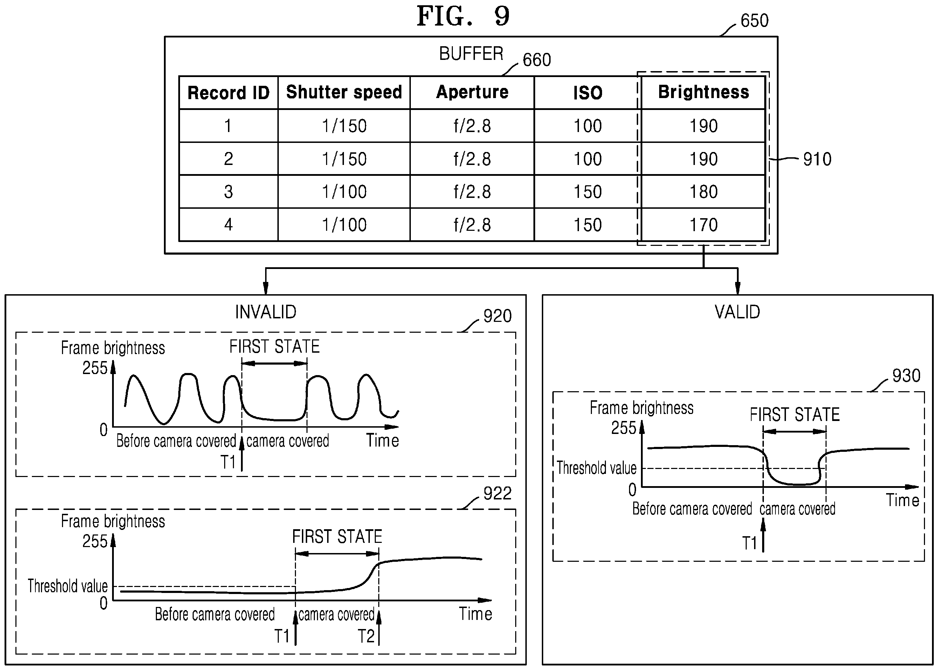

When the electronic device 100 determines in operation S306 of FIG. 3 described above that the brightness value of the image frame is less than the reference brightness value, in operation S308, the electronic device 100 determines whether the state thereof corresponds to the first state in which the camera 110 is blocked by an obstacle. When it is determined in operation S308 that the state of the electronic device 100 corresponds to the first state, in operation S702, the electronic device 100 determines whether buffer data is valid. According to an embodiment, the electronic device 100 may determine whether the buffer data is valid based on brightness values of a plurality of image frames stored in the buffer 650. The electronic device 100 calculates a distribution of brightness values of the plurality of image frames stored in the buffer 650, and determines, based on the distribution of brightness values of the plurality of image frames, whether the brightness values of the plurality of image frames stored in the buffer 650 are stable. Furthermore, according to an embodiment, the electronic device 100 determines whether the brightness values of the plurality of image frames all exceed a minimum brightness value. The electronic device 100 determines that the exposure settings and the brightness value of the image frame are valid, based on determining that the brightness values of the plurality of image frames stored in the buffer 650 are stable and that the brightness values of the plurality of image frames exceed the minimum brightness value. The operation of determining whether the buffer data is valid is described in more detail below with reference to FIGS. 8 and 9.

When the electronic device 100 determines that the buffer data is valid, the electronic device 100 changes exposure settings to preset first exposure settings in operation S310.

When the electronic device 100 determines that the state of the electronic device 100 does not correspond to the first state in operation S308, the electronic device 100 increases the frame rate to a second frame rate. Furthermore, when the electronic device 100 determines that the buffer data is invalid in operation S702, the electronic device 100 increases the frame rate to the second frame rate.

FIG. 8 is a diagram illustrating a process of determining whether buffer data is valid, according to an embodiment of the present disclosure.

FIG. 9 is a diagram illustrating an example of valid buffer data and an example of invalid buffer data, according to an embodiment of the present disclosure.

As described above with reference to FIG. 7, when the electronic device 100 determines in operation S308 that the state thereof corresponds to the first state in which the camera 110 is blocked by an obstacle, the electronic device 100 determines whether buffer data is valid in operation 702. Operations S802, S804, S806, and S808 of FIG. 8 may be included in operation S702.

The electronic device 100 determines whether buffer data is valid based on the buffer data currently stored in the buffer 650. The currently stored buffer data is data obtained before a time point when the state of the electronic device 100 is determined to correspond to the first state in operation S308 based on the frame rate and the image frame brightness value.

First, in operation S802, the electronic device 100 determines whether a distribution of image frame brightness values is stable. The electronic device 100 determines whether the distribution of the image frame brightness values is stable, based on image frame brightness value 910 from the shooting information table 660 stored in the buffer 650.

Graph 920, graph 922, and graph 930 of FIG. 9 show image frame brightness values over time. The electronic device 100 generates the graph 920, graph 922, and graph 930 based on the image frame brightness values 910. The electronic device 100 determines the distribution of the image frame brightness values 910 from the graph 920, graph 922, and graph 930.

When a value of change in an image frame brightness value is greater than a reference value as shown in graph 920, the electronic device 100 may determine that the distribution of the image frame brightness values 910 is not stable. The electronic device 100 determines whether the distribution of the image frame brightness values 910 is stable, based on image frame brightness values before a time point T1 when the state of the electronic device 100 is determined to correspond to the first state. According to an embodiment, the electronic device 100 may determine whether the value of change in an image frame brightness value is greater than the reference value by using a first derivative or a second derivative on the graph 920. According to an embodiment, the electronic device 100 determines whether a value of change in an image frame brightness value is greater than a reference value by using interpolation. For example, the electronic device 100 measures a change in an image frame brightness value based on a standard deviation from an interpolated value of image frame brightness values, and compares a value of change with the reference value . According to an embodiment, the electronic device 100 determines whether a value of change in an image frame brightness value is greater than a reference value by using clustering. The electronic device 100 determines whether a deviation of an image frame brightness value is greater than the reference value as a result of the clustering. When the value of change in an image frame brightness value is less than or equal to the reference value, the electronic device 100 determines that the distribution of the image frame brightness values 910 is stable.

When the electronic device 100 determines that the distribution of image frame brightness values is not stable, the electronic device 100 determines that the buffer data is invalid in operation S808.

When the electronic device 100 determines that the distribution of image frame brightness values is stable, in operation S804, the electronic device 100 determines whether the image frame brightness values exceed a minimum brightness value. The electronic device 100 determines whether the image frame brightness values 910 all exceed a minimum brightness value, based on the image frame brightness values before time point T1 when the state of the electronic device 100 is determined to correspond to the first state. The minimum brightness value corresponds to a threshold value in the graph 922.

When the image frame brightness values are less than the threshold value, the electronic device 100 determines that the buffer data is invalid in operation S808. The threshold value may correspond to, for example, a brightness value of 20. As shown in the graph 922 of FIG. 9, when an image frame brightness value before time point T1 is less than the threshold value and an image frame brightness value after time point T2 is increased compared to before the time point T1, the electronic device 100 may be in an overexposed state after the time point T2. Therefore, the electronic device 100 increases a frame rate instead of increasing exposure. On the other hand, when an image frame brightness value is high before time point T1 and an image frame brightness value is low after time point T2, overexposure does not occur. Therefore, for the case where the image frame brightness value is high before the time point T1 and the image frame brightness value is low after the time point T2, the electronic device 100 sets the exposure settings to the first exposure settings to increase the exposure.

When the distribution of image frame brightness values is stable and the image frame brightness values exceed the minimum brightness value, the electronic device 100 determines that the buffer data is valid in operation S806. Referring to the graph 930 of FIG. 9, a value of change in an image frame brightness value before time point T1 when the state of electronic device 100 is determined to correspond to the first state is less than or equal to the reference value, and the image frame brightness values exceed the minimum brightness value. In this case, the electronic device 100 determines that the buffer data is valid.

When the buffer data is determined to be valid in operation S806, the electronic device 100 changes camera exposure settings to the first exposure settings in operation S310.

When the buffer data is determined to be invalid in operation S808, the electronic device 100 increases the current frame rate to the second frame rate in operation S704.

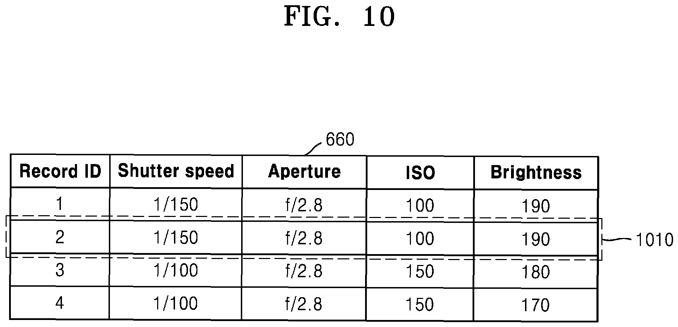

FIG. 10 is a diagram illustrating a process of determining first exposure settings according to an embodiment of the present disclosure.

According to an embodiment of the present disclosure, the electronic device 100 may determine exposure settings for an image frame corresponding to a highest image frame brightness value in buffer data as the first exposure settings. The electronic device 100 identifies an image frame 1010 having a highest image frame brightness value in the buffer data. In an example of FIG. 10, the image frame 1010 having a Record ID value of 2 corresponds to an image frame having the highest image frame brightness value. The electronic device 1010 sets exposure settings for the image frame 1010 having the highest image frame brightness value as the first exposure settings.

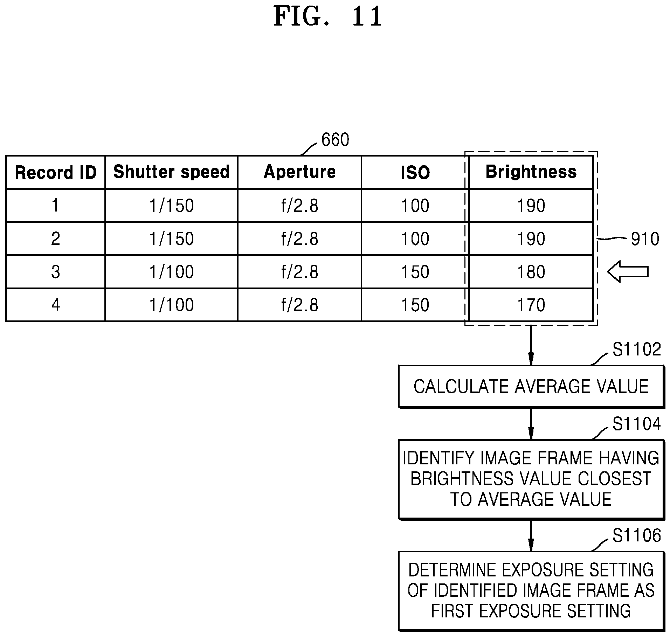

FIG. 11 is a diagram illustrating a process of determining first exposure settings according to an embodiment of the present disclosure.

According to an embodiment of the present disclosure, the electronic device 100 sets exposure settings for an image frame having an image frame brightness value that is closest to an average of image frame brightness values as first exposure settings.

In operation S1102, the electronic device 100 calculates an average of image frame brightness values 910 stored in buffer data. For example, in the case of the buffer data of FIG. 11, the average value corresponds to 182.5.

Next, in operation S1104, the electronic device 100 identifies an image frame having an image frame brightness value closest to the average of the image frame brightness values 910. For example, in the case of the buffer data of FIG. 11, the electronic device 100 identifies that a brightness value of an image frame corresponding to Record ID of 3 is 180, which is closest to the average value of 182.5.

Next, in operation S1106, the electronic device 100 sets exposure settings for the image frame with the image frame brightness value determined to be closest to the average value as the first exposure settings. For example, in the case of the buffer data of FIG. 11, the electronic device 100 sets exposure settings for the image frame corresponding to Record ID of 3 as the first exposure settings.

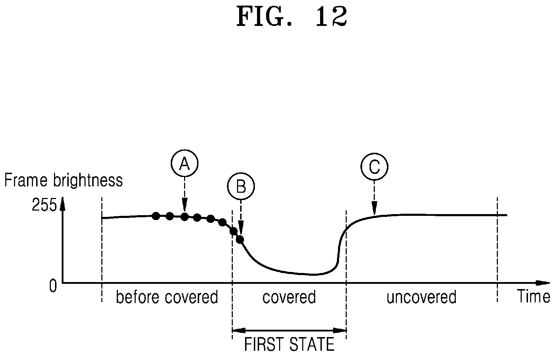

FIG. 12 illustrates an effect of controlling exposure settings, according to an embodiment of the present disclosure.

According to an embodiment of the present disclosure, in the first state where the camera 110 is covered by an obstacle, the electronic device 100 sets first exposure settings based on exposure settings applied before entering the first state. Referring to the graph of FIG. 12, at point B corresponding to the first state, exposure settings at point A that is before the first state are applied. A surrounding environment at point C when the obstacle is removed from the camera 110 is not predictable in the first state. However, the surrounding environment at point C is highly likely to be similar to the surrounding environment at point A. In the embodiments of the present disclosure, determining the first state is performed during a shooting mode. Because the user captures an image while trying not to cover the camera 110 as much as possible, the first state is highly likely to correspond to a short time period of several seconds or tens of seconds. After a short time period of several seconds or tens of seconds has elapsed since entering the first state , the environment is likely to be similar to the surrounding environment before entering the first state. Therefore, according to an embodiment of the present disclosure, by applying the first exposure settings, which are determined based on the exposure settings applied before the first state, during the first state, there is an effect of increasing the possibility of quickly reaching the proper exposure after the first state ends.

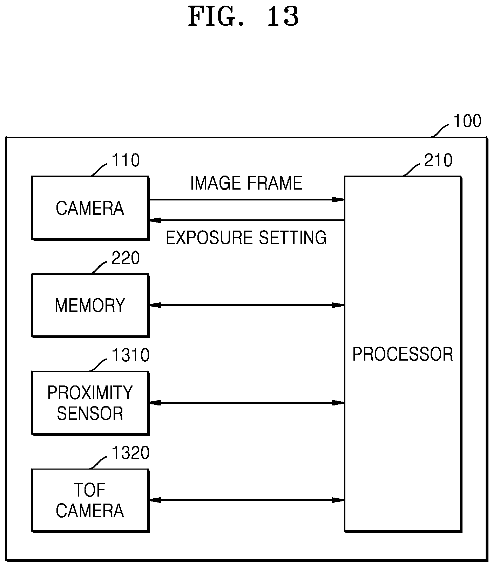

FIG. 13 is a block diagram illustrating a structure of an electronic device according to an embodiment of the present disclosure.

According to an embodiment of the present disclosure, the electronic device 100 may determine whether a state of the electronic device 100 corresponds to the first state, based on a detection value of a predetermined sensor or image data of an image frame. The electronic device 100 determines whether the state of the electronic device 100 corresponds to the first state only when it is determined that a predetermined condition is met based on a frame rate and image frame brightness values. According to an embodiment of the present disclosure, by determining whether the state of the electronic device 100 corresponds to the first state only when the predetermined condition is met as described above, the electronic device 100 may reduce the load of obtaining and processing sensor data. In addition, according to an embodiment of the present disclosure, by determining whether the state of the electronic device 100 corresponds to the first state only when the predetermined condition is met, the electronic device 100 may reduce a processing load for determining whether the state of the electronic device 100 corresponds to the first state based on data of an image frame.

According to an embodiment of the present disclosure, the electronic device 100 includes the camera 110, the processor 210, the memory 220, a proximity sensor 1310, and a ToF camera 1320. The electronic device 100 may include only one of the proximity sensor 1310 and the ToF camera 1320, or both. In FIG. 13, a description of the same part as in the configuration of the electronic device 100 of FIG. 2 is omitted, and the description focuses on configurations of the proximity sensor 1310 and the ToF camera 1320, which are additional components, and components related thereto.

The proximity sensor 1310 is a sensor provided on an outside of the electronic device 100 and may detect the presence of nearby objects. The proximity sensor 1310 emits an electromagnetic field or electromagnetic waves (e.g., infrared) and detects the presence of nearby objects by detecting a returning signal. The proximity sensor 1310 includes, for example, an infrared sensor.

According to an embodiment of the present disclosure, the proximity sensor 1310 may be located around the camera 110. For example, the proximity sensor 1310 may be disposed within about 1 centimeter (cm) from the camera 110.

The processor 210 may determine, based on a detection value of the proximity sensor 1310, whether the camera 110 corresponds to a first state in which the camera 110 is covered by an obstacle. The processor 210 receives an input from the proximity sensor 1310, and when the proximity sensor 1310 is activated, the processor 210 may determine that the camera 110 corresponds to the first state in which the camera 110 is covered by an obstacle.

The ToF camera 1320 is provided on the outside of the electronic device 100 to recognize an object in front and measure a distance to the object. The ToF camera 1320 may be located around the camera 110. For example, the ToF camera 1320 may be disposed within about 1 cm from the camera 110. The ToF camera 1320 emits infrared light, and measures the time it takes for the infrared light to bounce off an object in front and return, thereby measuring a distance to the object in front. The processor 210 may recognize a three-dimensional (3D) structure in front of the ToF camera 1320 based on the distance to the object measured by the ToF camera 1320, and generate a depth map.

The depth map includes a plurality of pixels arranged in a two-dimensional (2D) array. Each pixel in the depth map represents a distance from the corresponding pixel to the detected object. Smaller pixel values in the depth map indicates that the object is closer, while larger pixel values indicate that the object is farther away. A field of view (FOV) of the ToF camera 1320 may correspond to a FOV of the camera 110 or may have a predetermined alignment condition. Thus, the processor 210 may match coordinates of each point on the depth map with coordinates of the corresponding point on an image frame captured by the camera 110.

The processor 210 may determine, based on the depth map, whether the state of the electronic device 100 corresponds to the first state in which the camera 110 is covered by an obstacle. When a minimum value of the depth map is less than a threshold value, the processor 210 may determine that the state of the electronic device 100 corresponds to the first state.

According to an embodiment, when the camera 110 corresponds to the first state, the processor 210 changes exposure settings of the camera 110 to the first exposure settings.

According to an embodiment, the processor 210 changes exposure settings of the camera 110 to the first exposure settings when the camera 110 corresponds to the first state and buffer data is valid. When the processor 210 determines that the camera 110 corresponds to the first state and the buffer data is invalid, the processor 210 increases the frame rate to a first frame rate.

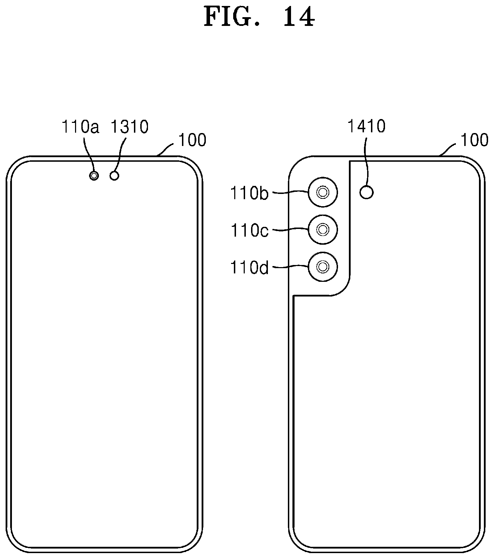

FIG. 14 is a diagram illustrating the arrangement of a camera, a proximity sensor, and a ToF camera in an electronic device, according to an embodiment of the present disclosure.

According to an embodiment of the present disclosure, the camera 110 includes a plurality of cameras. For example, the camera 110 may include a front camera 110a and rear cameras 110b, 110c, and 110d. In the shooting mode, the electronic device 100 may perform an image capture operation and generate an image frame by using the cameras 110a, 110b, 110c, and 110d selected among the front camera 110a and the rear cameras 110b, 110c, and 110d.

The electronic device 100 may include a proximity sensor 1310 around the front camera 110a. When the proximity sensor 1310 on the front detects approach of an object while the electronic device 100 is performing image capturing by using the front camera 110a in the shooting mode, the electronic device 100 may determine that a state thereof corresponds to the first state.

The electronic device 100 may include the plurality of rear cameras 110b, 110c, and 110d. The plurality of rear cameras 110b, 110c, and 110d may include an ultra-wide-angle camera 110b, a main camera 110c, and a telephoto camera 110d. When the processor 210 performs image capturing by using the rear cameras 110b, 110c, and 110d, the processor 210 may respectively obtain image frames from the plurality of rear cameras 110b, 110c, and 110d and synthesize the image frames from the rear cameras 110b, 110c, and 110d to generate a final image frame.

The electronic device 100 may include a ToF camera 1410 arranged around the plurality of rear cameras 110b, 110c, and 110d. While performing image capturing by using the rear cameras 110b, 110c, and 110d, the electronic device 100 may determine whether the electronic device 100 corresponds to the first state based on a depth map obtained from the ToF camera 1410.

When the electronic device 100 includes the plurality of cameras 110a, 110b, 110c, and 110d at different locations, the electronic device 100 performs image capturing by selecting some of the plurality of cameras 110a, 110b, 110c, and 110d in a shooting mode. The selection of the cameras 110a, 110b, 110c, and 110d may be performed automatically or according to a user input. When the cameras 110a, 110b, 110c, and 110d to perform image capturing are selected, the electronic device 100 determines whether the electronic device 100 corresponds to the first state by using detection values of sensors (e.g., the proximity sensor 1310 or the ToF camera 1410) in the vicinity of the selected cameras 110a, 110b, 110c, and 110d. For example, when the front camera 110a is selected in the shooting mode, the processor 210 activates the proximity sensor 1310 around the front camera 110a to obtain a sensor detection value of the proximity sensor 1310, and determines whether the electronic device 100 corresponds to the first state based on the sensor detection value. When the rear cameras 110b, 110c, and 110d are selected in the shooting mode, the processor 210 activates the ToF camera 1410 around the rear cameras 110b, 110c, and 110d to obtain a depth map from the ToF camera 1410, and determines whether the electronic device 100 corresponds to the first state by using the depth map.

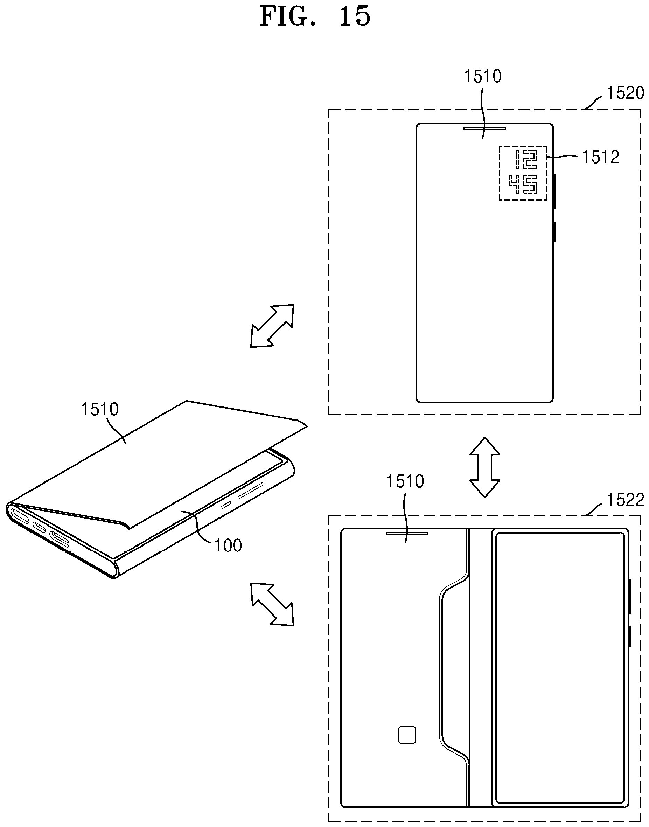

FIG. 15 is a diagram illustrating a protective case of an electronic device, according to an embodiment of the present disclosure.

According to an embodiment of the present disclosure, the electronic device 100 may be coupled with a protective case 1510. The protective case 1510 may include a main body fitted with the electronic device 100 and a cover covering a display of the electronic device 100. According to an embodiment of the present disclosure, the protective case 1510 may have a folded state 1520 in which the cover covers a front side (a side on which the display is disposed) of the electronic device 100 and an open state 1522 in which the cover is unfolded to open the front side of the electronic device 100.

The protective case 1510 is detachably coupled to the electronic device 100. The protective case 1510 is configured so that the cover is opened and closed by a user. The protective case 1510 may include a magnet at a predetermined location of the cover. By recognizing the magnet on the protective case 1510, the electronic device 100 may recognize the folded state 1520 and the open state 1522 of the protective case 1510.

According to an embodiment, the protective case 1510 may have a display 1512 on the front side. The display 1512 may include, for example, a light-emitting diode (LED) transmissive display.

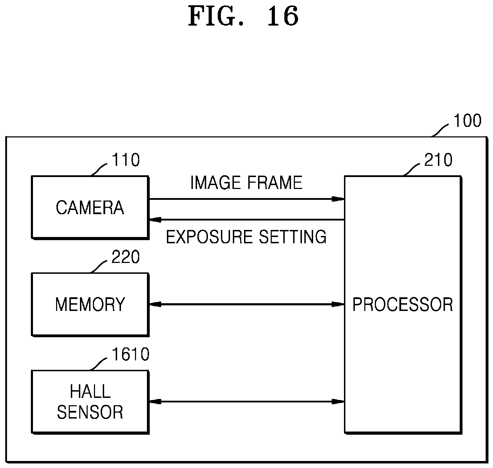

FIG. 16 is a block diagram illustrating a structure of an electronic device according to an embodiment of the present disclosure.

According to an embodiment of the present disclosure, the electronic device 100 includes the camera 110, the processor 210, the memory 220, and a Hall sensor 1610. In FIG. 16, a description of the same part as in the configuration of the electronic device 100 of FIG. 2 is omitted, and the description focuses on a configuration of the Hall sensor 1610 as an additional component, and components related thereto.

The Hall sensor 1610 detects a direction and a magnitude of a magnetic field. The Hall sensor 1610 is a sensor using the Hall effect and detects a magnetic field around it.

The electronic device 100 may be coupled with the protective case 1510 of FIG. 15. The electronic device 100 includes the Hall sensor 1610 at a predetermined location. The Hall sensor 1610 may be located on a front side where a display of the electronic device 100 is disposed. The protective case 1510 may include a magnet at a location corresponding to the location of the Hall sensor 1610 of the electronic device 100. The magnet of the protective case 1510 may be located around the Hall sensor 1610 of the electronic device 100 when the protective case 1510 is in the folded state 1520.

The processor 210 detects the folded state 1520 and the open state 1522 of the protective case 1510 based on a detection value of the Hall sensor 1610. The processor 210 may detect a state of engagement with the protective case 1510 by detecting coupling with the protective case 1510. The processor 210 detects the folded state 1520 and the open state 1522 of the protective case 1510 based on a detection value of the Hall sensor 1610 in a state in which the electronic device 100 is coupled with the protective case 1510.

When the protective case 1510 is in the folded state 1520, the processor 210 determines that the front camera 110 is in the first state in which the front camera 110 is covered by an obstacle. The processor 210 obtains a detection value from the Hall sensor 161 when a current frame rate is lower than the reference frame rate and an image frame brightness value is less than the reference brightness value. The processor 210 determines, based on the detection value of the Hall sensor 1610, whether the protective case 1510 is in the folded state 1520 or the open state 1522. When the protective case 1510 is in the folded state 1520, the processor 210 determines that the front camera 110 is in the first state in which it is covered by an obstacle.

According to an embodiment, when the camera 110 corresponds to the first state, the processor 210 changes exposure settings of the camera 110 to the first exposure settings.

According to an embodiment, the processor 210 changes exposure settings of the camera 110 to the first exposure settings when the camera 110 corresponds to the first state and buffer data is valid. When the processor 210 determines that the camera 110 corresponds to the first state and the buffer data is invalid, the processor 210 increases the frame rate to the first frame rate.

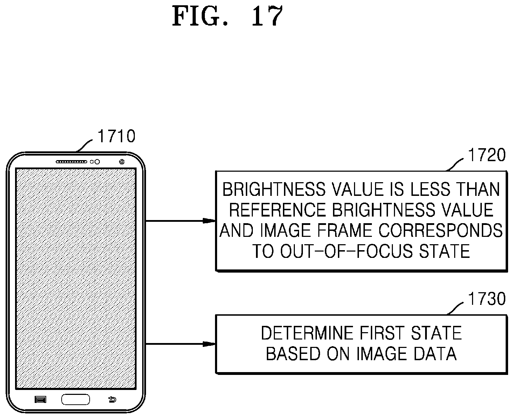

FIG. 17 is a diagram illustrating a configuration for determining a first state of an electronic device based on image frame data, according to an embodiment of the present disclosure.

According to an embodiment of the present disclosure, the electronic device 100 may determine whether a state of the electronic device 100 corresponds to the first state, based on image data of an image frame 1710.

According to an embodiment of the present disclosure, in operation 1720, when a current frame rate is lower than the reference frame rate and an image frame brightness value is less than the reference brightness value, the electronic device 100 may determine whether a state thereof corresponds to the first state based on focusing information of the image frame. When the image frame corresponds to an out-of-focus state, the electronic device 100 may determine that the state thereof corresponds to the first state. According to an embodiment, the electronic device 100 may further determine whether the image frame brightness value is less than a reference first state brightness value. The reference first state brightness value may correspond to a brightness value lower than the reference brightness value used in operation S306 of FIG. 3 described above.

According to an embodiment of the present disclosure, in operation 1730, when the current frame rate is lower than the reference frame rate and the image frame brightness value is less than the reference brightness value, the electronic device 100 may determine whether the state thereof corresponds to the first state based on image data of the image frame. The electronic device 100 may perform scene recognition based on the image data of the image frame. When the electronic device 100 determines as a result of the scene recognition that the image frame is captured while the camera 110 is covered by an obstacle, the electronic device 100 determines that the state thereof corresponds to the first state.

According to an embodiment, when the camera 110 corresponds to the first state, the processor 210 changes exposure settings of the camera 110 to the first exposure settings.

According to an embodiment, the processor 210 changes exposure settings of the camera 110 to the first exposure settings when the camera 110 corresponds to the first state and buffer data is valid. When the processor 210 determines that the camera 110 corresponds to the first state and the buffer data is invalid, the processor 210 increases the frame rate to a first frame rate.

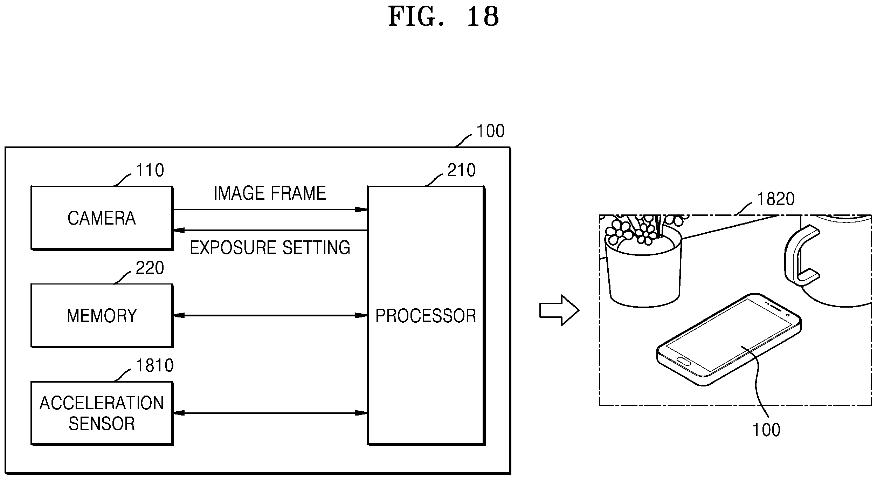

FIG. 18 is a block diagram illustrating a structure of an electronic device according to an embodiment of the present disclosure.

According to an embodiment of the present disclosure, the electronic device 100 includes the camera 110, the processor 210, the memory 220, and an acceleration sensor 1810. In FIG. 18, a description of the same part as in the configuration of the electronic device 100 of FIG. 2 is omitted, and the description focuses on a configuration of the acceleration sensor 1810 as an additional component, and components related thereto.

The acceleration sensor 1810 detects acceleration of the electronic device 100. The acceleration sensor 1810 may include a gyro sensor.

The processor 210 may detect movement of the electronic device 100 based on a detection value of the acceleration sensor 1810. The processor 210 may detect a state 1820 in which the electronic device 100 is placed on the floor, based on the detection value of the acceleration sensor 1810.

The processor 210 determines that the electronic device 100 is in the first state when a state of the electronic device 100 corresponds to the state 1820 in which it is placed on the floor. The processor 210 obtains a detection value from the acceleration sensor 1810 when a current frame rate is lower than the reference frame rate and an image frame brightness value is less than the reference brightness value. The processor 210 may determine, based on the detection value of the acceleration sensor 1810, whether the electronic device is in the state 1820 in which the electronic device 100 is placed on the floor. The processor 210 determines that the electronic device 100 corresponds to the first state when the electronic device 100 is in the state 1820 in which it is placed on the floor.

According to an embodiment, the electronic device 100 may include a front camera and a rear camera. The electronic device 100 may determine that a camera for which an image frame brightness value is less than or equal to the reference brightness value, from among the front camera and the rear camera, corresponds to the first state.

According to an embodiment, the processor 210 may detect, based on the detection value of the acceleration sensor 1810, a state in which the electronic device 100 is placed on the floor and an orientation in which it is placed. When the front camera is positioned to face the floor, the processor 210 may determine that the front camera corresponds to the first state in which the front camera is covered by an obstacle. When the rear camera is positioned to face the floor, the processor 210 may determine that the rear camera corresponds to the first state in which the rear camera is covered by an obstacle.

When the camera currently performing image capturing from among the front camera and the rear camera in the shooting mode corresponds to the first state, the processor 210 may change exposure settings of the camera performing the image capturing to the first exposure settings.

According to an embodiment, the processor 210 changes exposure settings of the camera 110 to the first exposure settings when the camera 110 corresponds to the first state and buffer data is valid. When the processor 210 determines that the camera 110 corresponds to the first state and the buffer data is invalid, the processor 210 increases the frame rate to the first frame rate.

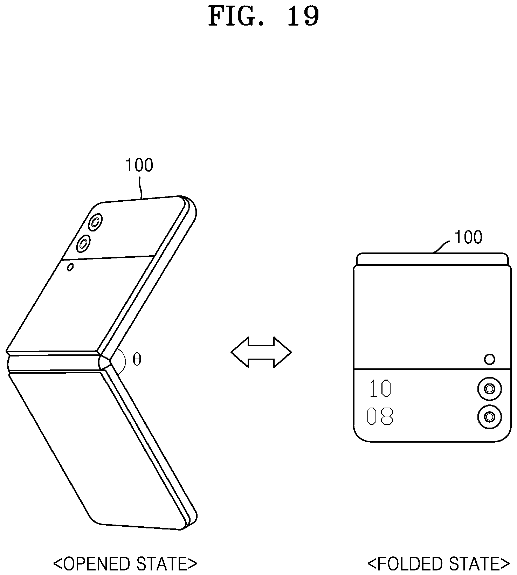

FIG. 19 is a diagram illustrating a structure of an electronic device according to an embodiment of the present disclosure.

According to an embodiment of the present disclosure, the electronic device 100 may have the form of a foldable device as shown in FIG. 19. The electronic device 100 includes a folding structure and may be folded or unfolded through the folding structure. The electronic device 100 may have an opened state and a folded state.

The electronic device 100 may detect a folding angle θ. The electronic device 100 includes an angle sensor and detects the folding angle θ by using the angle sensor. The folding angle θ refers to an angle formed by two bodies of the electronic device 100. The folding angle θ may correspond to 0 degrees when the electronic device 100 is in the folded state.

The electronic device 100 may include a front camera disposed on a front side and covered when the electronic device 100 is in the folded state. The front camera may be covered by the facing bodies of the electronic device 100 in the folded state.

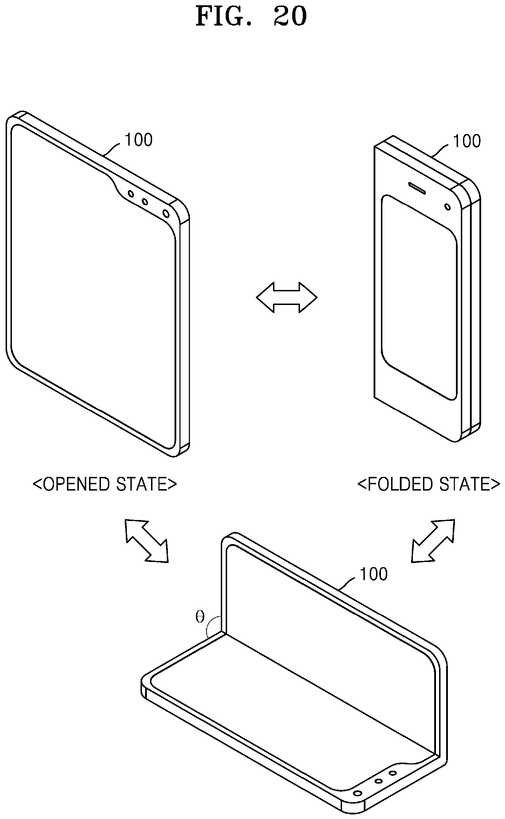

FIG. 20 is a diagram illustrating a structure of an electronic device according to an embodiment of the present disclosure.

According to an embodiment of the present disclosure, the electronic device 100 may have the form of a foldable device as shown in FIG. 20. The electronic device 100 includes a folding structure and may be folded or unfolded through the folding structure. The electronic device 100 may have an opened state and a folded state.

The electronic device 100 may detect a folding angle θ. The electronic device 100 includes an angle sensor and detects the folding angle θ by using the angle sensor. The folding angle θ refers to an angle formed by two bodies of the electronic device 100. The folding angle θ may correspond to 0 degrees when the electronic device 100 is in the folded state.

The electronic device 100 may include a front camera disposed on a front side and covered when the electronic device 100 is in the folded state. The front camera may be covered by the facing bodies of the electronic device 100 in the folded state.

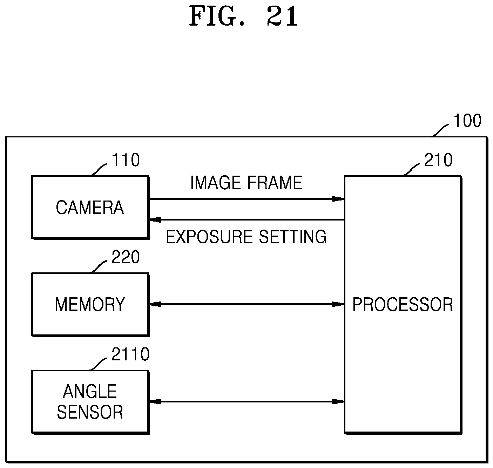

FIG. 21 is a block diagram illustrating a structure of an electronic device according to an embodiment of the present disclosure.

According to an embodiment of the present disclosure, the electronic device 100 includes the camera 110, the processor 210, the memory 220, and an angle sensor 2110. In FIG. 21, a description of the same part as in the configuration of the electronic device 100 of FIG. 2 is omitted, and the description focuses on a configuration of the angle sensor 2110 as an additional component, and components related thereto.

The angle sensor 2110 detects an angle of the electronic device 100. According to an embodiment, the angle sensor 2110 includes an acceleration sensor. The angle sensor 2110 detects movement of two bodies of the electronic device 100, and the processor 210 detects a folding angle θ formed by the two bodies based on the movement of the two bodies.

The processor 210 may detect the folding angle θ of the electronic device 100 based on a detection value of the angle sensor 2110. The processor 210 controls an operation of the electronic device 100 based on the folding angle θ.

When the folding angle θ is less than a reference angle value, the processor 210 determines that the electronic device 100 is in the first state. The processor 210 obtains a detection value from the angle sensor 2110 when a current frame rate is lower than the reference frame rate and an image frame brightness value is less than the reference brightness value. The processor 210 calculates a folding angle θ of the electronic device 100 based on the detection value of the angle sensor 2110. When the folding angle θ is less than a reference angle value, the processor 210 determines that the state of the electronic device 100 corresponds to the first state.

According to an embodiment, the electronic device 100 may include a front camera and a rear camera. The front camera is arranged on a front side that retracts inward when the electronic device 100 is in the folded state. In the folded state, the electronic device 100 determines that the front camera corresponds to the first state in which the front camera is covered by an obstacle.

The processor 210 determines whether the front camera corresponds to the first state when the current frame rate is less than the reference frame rate and the image frame brightness value is less than the reference brightness value during image capturing with the front camera. In this case, when the folding angle θ is less than the reference angle value, the processor 210 determines that the front camera corresponds to the first state.

When the camera currently performing image capturing from among the front camera and the rear camera in the shooting mode corresponds to the first state, the processor 210 may change exposure settings of the camera performing the image capturing to the first exposure settings.

According to an embodiment, the processor 210 changes exposure settings of the camera 110 to the first exposure settings when the camera 110 corresponds to the first state and buffer data is valid. When the processor 210 determines that the camera 110 corresponds to the first state and the buffer data is invalid, the processor 210 increases the frame rate to the first frame rate.

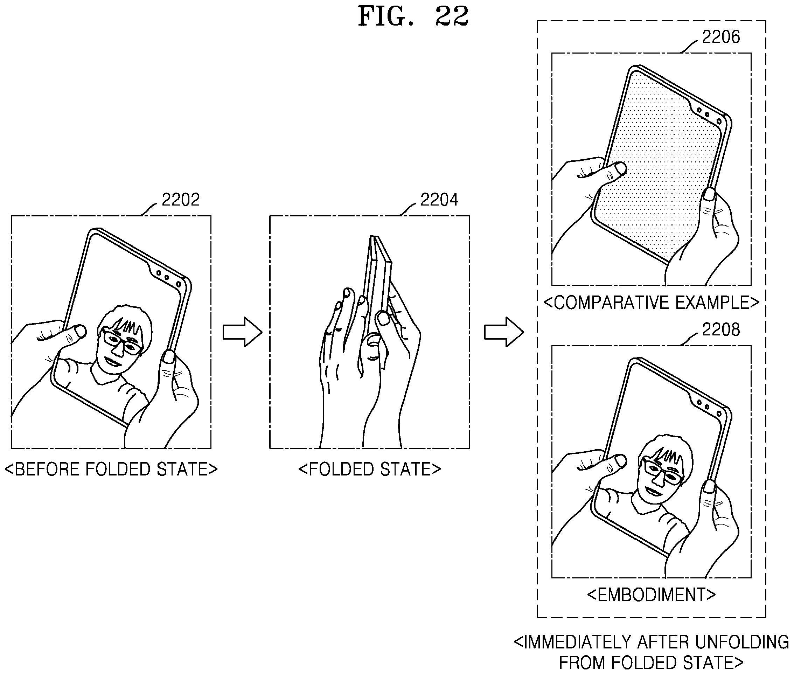

FIG. 22 is a diagram illustrating a result of auto exposure control according to an embodiment of the present disclosure.

As described above with reference to FIGS. 19 to 21, according to an embodiment of the present disclosure, the electronic device 100 determines whether it is in the first state based on a folded state or a folding angle and controls exposure settings. According to an embodiment of the present disclosure, even immediately after the electronic device 100 changes from a folded state to an opened state, it is possible to prevent an overexposure phenomenon and have appropriate exposure settings with a high probability.

As illustrated in FIG. 22, it is assumed that the electronic device 100 is in the opened state in operation 2202 and then changes to the folded state in operation 2204. Operation 2206 is a comparative example where an embodiment of the present disclosure is not applied, and operation 2208 is a case where an embodiment of the present disclosure is applied. In this case, according to the comparative example to which the embodiment of the present disclosure is not applied, overexposure occurs immediately after the electronic device 100 changes from the folded state back to the opened state, as in operation 2206. This causes a delay in returning from an overexposed state to proper exposure. On the other hand, in operation 2208 to which an embodiment of the present disclosure is applied, overexposure does not occur immediately after the electronic device 100 changes from the folded state back to the opened state due to the exposure settings control or frame rate control described above. Therefore, according to an embodiment of the present disclosure, overexposure of a front camera does not occur immediately after the change from the folded state to the opened state, and there is a short or little delay due to the auto exposure control.

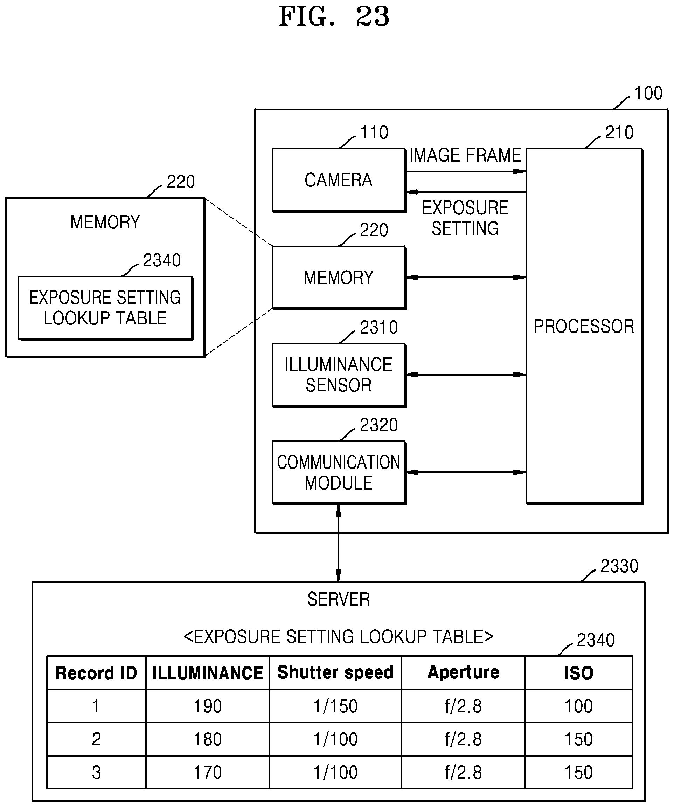

FIG. 23 is a block diagram illustrating a structure of an electronic device according to an embodiment of the present disclosure.

According to an embodiment of the present disclosure, the electronic device 100 includes the camera 110, the processor 210, the memory 220, an illuminance sensor 2310, and a communication module 2320. In FIG. 23, a description of the same part as in the configuration of the electronic device 100 of FIG. 2 is omitted, and the description focuses on configurations of the light sensor 2310 and the communication module 2320, which are additional components, and components related thereto.

The illuminance sensor 2310 detects illuminance of its surroundings. The illuminance sensor 2310 may include a light sensor having a photoelectric effect. The luminance sensor 2310 generates a sensor detection value and outputs it to the processor 210. The processor 210 obtains an illuminance value of the surroundings based on the sensor detection value input from the illuminance sensor 2310.

Based on the illuminance value, the processor 210 obtains exposure settings from an exposure settings lookup table 2340 stored in a database. The exposure settings lookup table 2340 includes exposure settings according to illuminance values. The processor 210 may obtain exposure settings corresponding to the detected illuminance value from the exposure settings lookup table 2340. The processor 210 sets exposure settings corresponding to an illuminance value as the first exposure settings.

According to an embodiment, the exposure settings lookup table 2340 may be stored in the memory 220. The processor 210 obtains exposure settings corresponding to an illuminance value from the exposure settings lookup table 2340 stored in the memory 220 and determines the first exposure settings.

According to an embodiment, the exposure settings lookup table 2340 may be stored in a server 2330. The electronic device 100 may communicate with the server 2330 via the communication module 2320 to obtain exposure settings corresponding to an illuminance value from the exposure settings lookup table 2340. When the processor 210 obtains an illuminance value, the processor 210 generates an exposure settings request including the illuminance value. When receiving the exposure settings request, the server 2330 identifies, from the exposure settings lookup table 2340, exposure settings corresponding to the illuminance value included in the exposure settings request. The server 2330 transmits the identified exposure settings to the electronic device 100. The electronic device 100 sets the exposure settings received from the server 2330 as the first exposure settings.

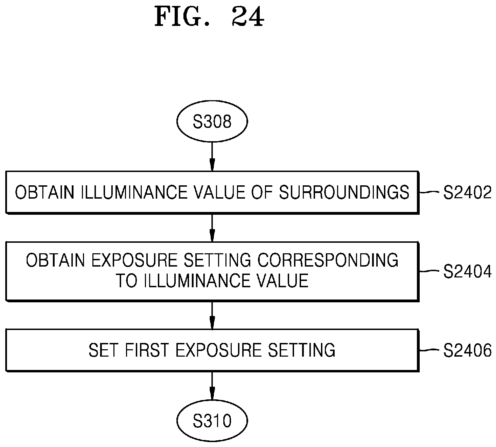

FIG. 24 is a flowchart illustrating a process of determining first exposure settings based on an illuminance value, according to an embodiment of the present disclosure.

According to an embodiment of the present disclosure, when the electronic device 100 is determined to correspond to the first state in operation S308, the electronic device 100 obtains an illuminance value of the surroundings in operation S2402.

In operation S2404, the electronic device 100 obtains exposure settings corresponding to the illuminance value from an exposure settings lookup table based on the illuminance value of the surroundings. The electronic device 100 obtains exposure settings corresponding to the illuminance value from the memory 220 or the server 2330.

The electronic device 100 sets the obtained exposure settings as the first exposure settings in operation S2406. When the first exposure settings are obtained, the electronic device 100 changes the current exposure settings to the first exposure settings in operation S310.

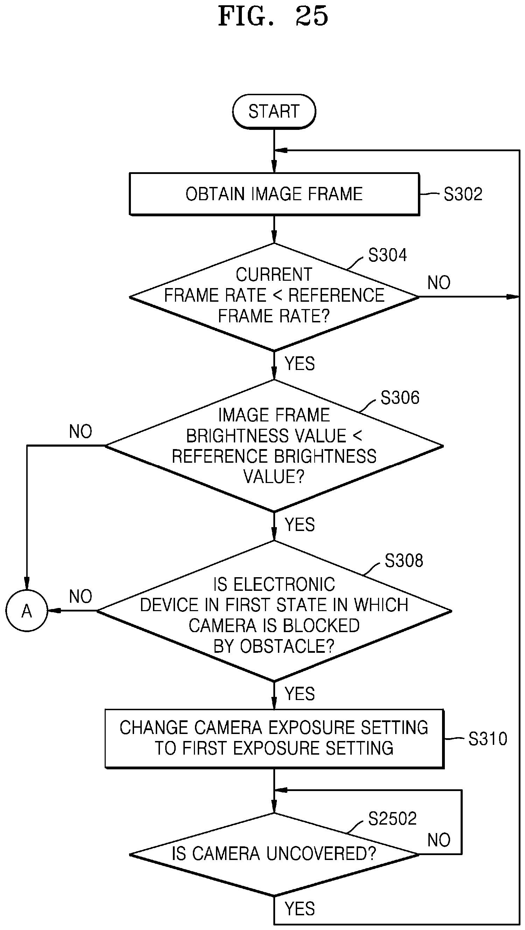

FIG. 25 is a flowchart of a method of controlling an electronic device, according to an embodiment of the present disclosure.

According to an embodiment of the present disclosure, the electronic device 100 determines that the state thereof corresponds to the first state and change the camera exposure settings to the first exposure settings in operation S310, and then determines in operation S2502 whether the camera 110 is uncovered or clear again. The electronic device 100 may determine whether the camera 110 is uncovered by using a method of determining whether the camera 110 corresponds to the first state.

According to an embodiment, the electronic device 100 determines whether the camera 110 is uncovered again based on a detection value of a proximity sensor. When the electronic device 100 determines that there is no nearby obstacle based on a detection value of the proximity sensor around the camera 110 covered by the obstacle, the electronic device 100 determines that the camera 100 is uncovered again.

According to an embodiment, the electronic device 100 determines whether the camera 110 is uncovered again by using a depth map obtained by a ToF camera. When a minimum depth value in the depth map exceeds a reference value, the electronic device 100 determines that the camera 110 around the ToF camera is uncovered again.

According to an embodiment, the electronic device 100 determines whether the camera 110 is uncovered again by using state information obtained from a protective case coupled to the electronic device 100. When a cover of the protective case is in an open state, the electronic device 100 determines that the camera 110 is uncovered again.

According to an embodiment, the electronic device 100 determines whether the camera 110 is uncovered again based on a focus state of the camera 110. The electronic device 100 determines that the camera 110 is uncovered again when the camera 110 is in focus.

According to an embodiment, the electronic device 100 determines whether the camera 110 is uncovered again based on image data of an obtained image frame. When the electronic device 100 determines that the camera 110 is not covered by an obstacle based on a result of scene recognition of the obtained image frame, the electronic device 100 determines that the camera 110 is uncovered again.

According to an embodiment, the electronic device 100 determines whether the camera 110 is uncovered again based on a detection value of an acceleration sensor. When the electronic device 100 determines that it is not placed on the floor based on the detection value of the acceleration sensor, the electronic device 100 determines that the camera 110 is uncovered again.

According to an embodiment, the electronic device 100 determines whether the camera 110 is uncovered again based on a folding angle of a foldable device. When the folding angle is greater than or equal to a reference angle value, the electronic device 100 determines that the camera 110 is uncovered again.

The electronic device 100 may determine whether a state thereof corresponds to the first state by using the various methods described above. The electronic device 100 may use at least one of the various methods described above, or a combination thereof. When the electronic device 100 determines whether a state thereof corresponds to the first state by using a plurality of methods, the electronic device 100 determines that the state thereof corresponds to the first state when it is determined by at least one of the plurality of methods that the state thereof corresponds to the first state. In operation S2502, the electronic device 100 determines whether the camera 110 is again based on a method by which the electronic device 100 determined that the state thereof corresponds to the first state.

For example, in operation S308, when it is determined, based on a detection value of the proximity sensor, that a front camera corresponds to the first state in which the front camera is covered by an obstacle, the electronic device 100 determines whether the obstacle has been removed based on the detection value of the proximity sensor. When the electronic device 100 determines that the obstacle has been removed based on the detection value of the proximity sensor, the electronic device 100 determines that the front camera is uncovered again.

In addition, for example, in operation S308, the electronic device 100 may determine that the front camera corresponds to the first state based on a folding angle of the foldable device. In this case, the electronic device 100 determines that the front camera is uncovered again when the folding angle is changed to the reference angle value or greater.

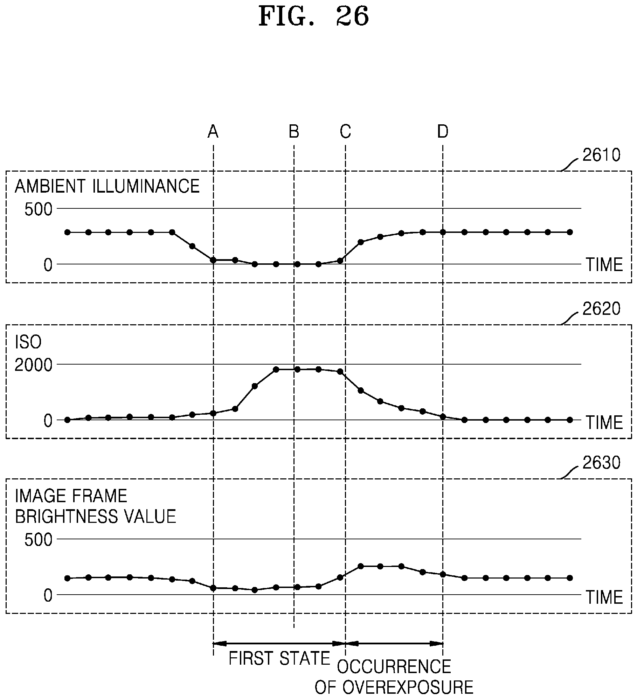

FIG. 26 is a diagram showing changes in ambient illuminance, ISO, and an image frame brightness value, according to a comparative example of the present disclosure.

The comparative example of FIG. 26 shows changes in ambient illuminance 2610, ISO, and image frame brightness value during the process of covering the camera of the electronic device 100 with an obstacle and then uncovering it again without applying exposure settings control according to an embodiment of the present disclosure. In FIG. 26, time point A is a time point when the camera is covered by an obstacle, and time point C is a time point when the obstacle is removed from the camera.

Before the camera is covered by the obstacle at the time point A, ISO corresponds to 55, and ambient illuminance corresponds to 270 lux. After the time point A, the camera is covered by the obstacle, and the ambient illuminance decreases to 1.5 lux. By auto exposure control, the ISO is increased to1800 or more at time point B. After the time point C when the obstacle is removed, the ambient illuminance quickly increases to 260 lux. However, the ISO decreases very slowly to 55 from time point C to time point D. This results in overexposure between the time point C and the time point D due to the high ambient illuminance and high ISO.

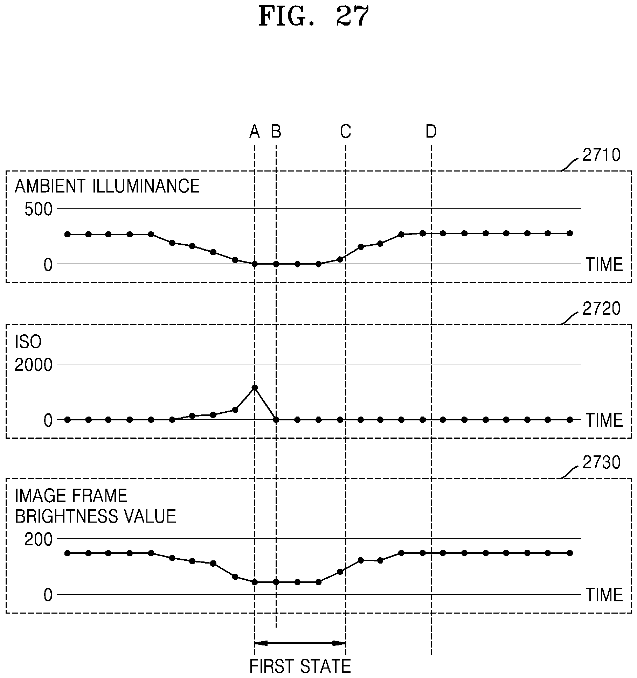

FIG. 27 is a diagram illustrating changes in ambient illuminance, ISO, and an image frame brightness value, according to an embodiment of the present disclosure.

FIG. 27 shows changes in ambient illuminance 2710, ISO, and image frame brightness value during the process of covering the camera of the electronic device 100 with an obstacle and then uncovering it again by applying exposure settings control according to an embodiment of the present disclosure. In FIG. 27, time point A is a time point when the camera is covered by an obstacle, and time point C is a time point when the obstacle is removed from the camera.

According to an embodiment of the present disclosure, when the electronic device 100 determines that the state thereof corresponds to the first state, the electronic device 100 controls a change of exposure settings at time point B to the first exposure settings or increases the current frame rate. For example, the electronic device 100 reduces the ISO value to 55 at the time point B based on this exposure settings or frame rate control. Thus, according to an embodiment of the present disclosure, there is an effect that overexposure does not occur between the time point C, which is immediately after the obstacle is removed from the camera 110, and time point D. As a result, according to an embodiment of the present disclosure, the time to reach the proper exposure immediately after the obstacle is removed from the camera 110 is significantly shortened, thereby significantly reducing a delay in auto exposure control.

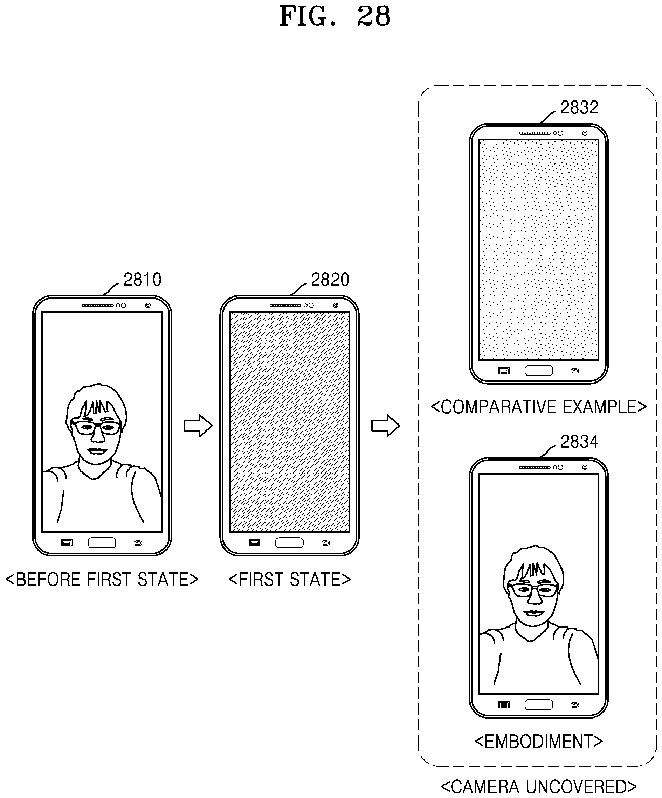

FIG. 28 is a diagram illustrating image frames according to a comparative example and an embodiment of the present disclosure.

The comparative example of the present disclosure shows a process of covering the camera of the electronic device 100 with an obstacle and then uncovering it again without applying exposure settings control according to an embodiment of the present disclosure. The image frames in FIG. 28 are all image frames captured by an electronic device that performs auto exposure control.

An image frame 2810 is an image frame captured before the camera is covered by the obstacle. An image frame 2820 is an image frame captured while the camera is covered by the obstacle.

An image frame 2832 is an image frame captured according to the comparative example when the obstacle that has covered the camera is removed and the camera is clear again. According to the comparative example, the image is captured at overexposure immediately after the obstacle is removed, as shown in the image frame 2832.

An image frame 2834 is an image frame captured according to an embodiment of the present disclosure when the obstacle that has covered the obstacle is removed and the camera is uncovered again. According to an embodiment of the present disclosure, the image is still captured at proper exposure immediately after the obstacle is removed, as shown in the image frame 2834.

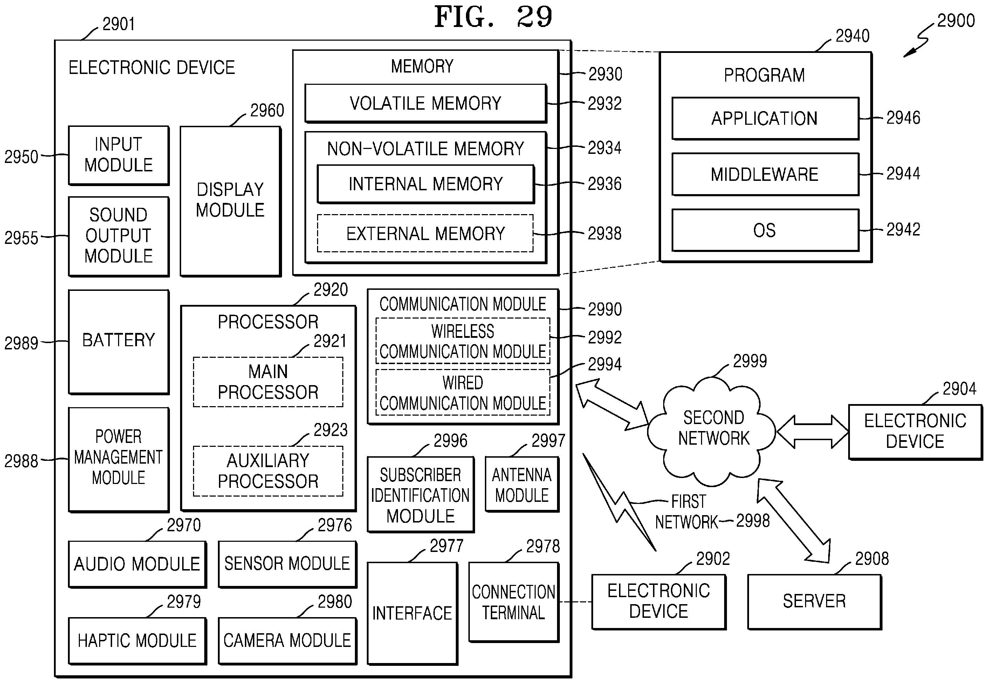

FIG. 29 is a block diagram of an electronic device in a network environment, according to an embodiment of the present disclosure.

An electronic device 2901 of FIG. 29 may correspond to the electronic device 100 described above. Also, a server 2908 may correspond to the server 2330 described with reference to FIG. 23. In addition, a processor 2920 of FIG. 29 may correspond to the processor 210 of FIG. 2, a camera module 2980 of FIG. 29 may correspond to the camera 110 of FIG. 2, and a memory 2930 of FIG. 29 may correspond to the memory 220 of FIG. 2.

Referring to FIG. 29, in a network environment 2900, an electronic device 2901 may communicate with an electronic device 2902 over a first network 2998 (e.g., a short-range wireless communication network), or communicate with at least one of an electronic device 2904 or the server 2908 over a second network 2999 (e.g., a long-range wireless communication network). According to an embodiment, the electronic device 2901 may communicate with the electronic device 2904 via the server 2908. According to an embodiment, the electronic device 2901 may include the processor 2920, the memory 2930, an input module 2950, a sound output module 2955, a display module 2960, an audio module 2970, a sensor module 2976, an interface 2977, a connection terminal 2978, a haptic module 2979, the camera module 2980, a power management module 2988, a battery 2989, a communication module 2990, a subscriber identification module 2996, or an antenna module 2997. In an embodiment, the electronic device 2901 may not include at least one of these components (e.g., the connection terminal 2978) or further include one or more other components. In an embodiment, some of these components (e.g., the sensor module 2976, the camera module 2980, or the antenna module 2997) may be integrated into a single component (e.g., the display module 2960).

For example, the processor 2920 may execute software (e.g., a program 2940) to control at least one other component (e.g., a hardware or software component) of the electronic device 2901, which is connected to the processor 2920, and perform various data processing or computations. According to an embodiment, as at least a part of the data processing or computations, the processor 2920 may store commands or data received from other components (e.g., the sensor module 2976 or the communication module 2990) in a volatile memory 2932, process the commands or data stored in the volatile memory 2932, and store the resulting data in a non-volatile memory 2934. According to an embodiment, the processor 2920 may include a main processor 2921 (e.g., a CPU or an AP), or an auxiliary processor 2923 (e.g., a GPU, an NPU, an image signal processor, a sensor hub processor, or a communication processor) which is operable independently of or in conjunction with the main processor 2921. For example, when the electronic device 2901 includes the main processor 2921 and the auxiliary processor 2923, the auxiliary processor 2923 may be configured to use less power than the main processor 2921 or to be specialized for a specified function. The auxiliary processor 2923 may be implemented separately from or as a part of the main processor 2921.

For example, the auxiliary processor 2923 may control at least some of functions or states related to at least one of the components of the electronic device 2901 (e.g., the display module 2960, the sensor module 2976, or the communication module 2990) instead of the main processor 2921 while the main processor 2921 is in an inactive (e.g., sleep) state, or in conjunction with the main processor 2921 while the main processor 2921 is in an active state (e.g., executing an application). According to an embodiment, the auxiliary processor 2923 (e.g., the image signal processor or communication processor) may be implemented as a part of another functionally related component (e.g., the camera module 2980 or communication module 2990). According to an embodiment, the auxiliary processor 2923 (e.g., the NPU) may include a hardware structure specialized for processing an AI model. AI models may be generated through machine learning. Such machine learning may be performed by the electronic device 2901 itself, or through a separate server (e.g., the server 2908). Learning algorithms may include, for example, supervised learning, unsupervised learning, semi-supervised learning, or reinforcement learning, but are not limited to the stated examples. An AI model may include a plurality of artificial neural network layers. An artificial neural network may be, but is not limited to, one of a deep neural network (DNN), a convolutional neural network (CNN), a recurrent neural network (RNN), a restricted Boltzmann machine (RBM), a deep belief network (DBN), a bidirectional recurrent DNN (BRDNN), a deep Q-network (DQN), or a combination of two or more of the stated networks. The AI model may include a software structure in addition to or instead of the hardware structure.

The memory 2930 may store various types of data used by at least one component (e.g., the processor 2920 or the sensor module 2976) of the electronic device 2901. The various types of data may include, for example, input data or output data for software (e.g., the program 2940) and commands related thereto. The memory 2930 may include the volatile memory 2932 or the non-volatile memory 2934.

The program 2940 may be stored in the memory 2930 as software and include, for example, an operating system (OS) 2942, middleware 2944, or an application 2946.

The input module 2950 may receive commands or data to be used by components (e.g., the processor 2920) of the electronic device 2901 from outside of the electronic device 2901 (e.g., a user). The input module 2950 may include, for example, a microphone, a mouse, a keyboard, a key (e.g., a button), or a digital pen (e.g., a stylus pen).

The sound output module 2955 may output sound signals to the outside of the electronic device 2901. The sound output module 2955 may include, for example, a speaker or a receiver. The speaker may be used for general purposes, such as playing multimedia or playing recordings. The receiver may be used to receive incoming calls. According to an embodiment, the receiver may be implemented separately from or as a part of the speaker.

The display module 2960 may visually provide information to the outside of the electronic device 2901 (e.g., the user). The display module 2960 may include, for example, a display, a hologram device, or a projector and control circuitry for controlling a corresponding device. According to an embodiment, the display module 2960 may include a touch sensor configured to detect a touch, or a pressure sensor configured to measure the intensity of a force generated by the touch.

The audio module 2970 may convert sound into an electrical signal, or vice versa. According to an embodiment, the audio module 2970 may obtain sound via the input module 2950, or output the sound via the sound output module 2955 or an external electronic device (e.g., the electronic device 2902) (e.g., a speaker or a headphone) that is connected directly or wirelessly to the electronic device 2901.

The sensor module 2976 may detect an operating state (e.g., power or temperature) of the electronic device 2901 or an external environmental state (e.g., a user's state), and generate an electrical signal or data value corresponding to the detected state. According to an embodiment, the sensor module 2976 may include, for example, a gesture sensor, a gyro sensor, a barometric pressure sensor, a magnetic sensor, an acceleration sensor, a grip sensor, a proximity sensor, a color sensor, an infrared sensor, a biometric sensor, a temperature sensor, a humidity sensor, or an illuminance sensor.

The interface 2977 may support one or more specified protocols that may be used by the electronic device 2901 to directly or wirelessly connect with an external electronic device (e.g., the electronic device 2902). According to an embodiment, the interface 2977 may include, for example, a high- definition multimedia interface (HDMI), a universal serial bus (USB) interface, a secure digital (SD) card interface, or an audio interface.

The connection terminal 2978 may include a connector via which the electronic device 2901 may be physically connected to an external electronic device (e.g., the electronic device 2902). According to an embodiment, the connection terminal 2978 may include, for example, an HDMI connector, a USB connector, an SD card connector, or an audio connector (e.g., a headphone connector).

The haptic module 2979 may convert electrical signals into mechanical stimuli (e.g., vibration or movement) or electrical stimuli that a user is able to perceive through tactile or kinesthetic sensations. According to an embodiment, the haptic module 2979 may include, for example, a motor, a piezoelectric element, or an electric stimulator.

The camera module 2980 may capture still images or video. According to an embodiment, the camera module 2980 may include one or more lenses, image sensors, image signal processors, or flashes.

The power management module 2988 may manage power supplied to the electronic device 2901. According to an embodiment, the power management module 2988 may be implemented as at least a part of, for example, a power management integrated circuit (PMIC).

The battery 2989 may supply power to at least one component of the electronic device 2901. According to an embodiment, the battery 2989 may include, for example, a primary cell which is non-rechargeable, a secondary cell which is rechargeable, or a fuel cell.

The communication module 2990 may support establishing a direct (e.g., wired) communication channel or a wireless communication channel between the electronic device 2901 and an external electronic device (e.g., the electronic device 2902, the electronic device 2904, or the server 2908) and performing communication via the established communication channel. The communication module 2990 may include one or more communication processors that operate independently of the processor 2920 (e.g., AP) and support direct (e.g., wired) communication or wireless communication. According to an embodiment, the communication module 2990 may include a wireless communication module 2992 (e.g., a cellular communication module, a short-range wireless communication module, or a global navigation satellite system (GNSS) communication module) or a wired communication module 2994 (e.g., a local area network (LAN) communication module or a power line communication (PLC) module). A corresponding one of these communication modules may communicate with the external electronic device 2904 over the first network 2998 (e.g., a short-range communication network, such as Bluetooth, wireless fidelity (Wi-Fi) Direct (WFD), or Infrared Data Association (IrDA)) or the second network 2999 (e.g., a long-range communication network, such as a legacy cellular network, a 5th-generation (5G) network, a next-generation communication network, the Internet, or a computer network (e.g., a LAN or wide area network (WAN)). These various types of communication modules may be integrated into a single component (e.g., a single chip) or be implemented as a plurality of separate components (e.g., a plurality of chips). The wireless communication module 2992 may identify or authenticate the electronic device 2901 within a communication network such as the first network 2998 or the second network 2999 by using subscriber information (e.g., an international mobile subscriber identifier (IMSI)) stored in the subscriber identification module 2996.

The wireless communication module 2992 may support a 5G network and a next-generation communication technology after a 4th-generation (4G) network, such as new radio (NR) access technology. The NR access technology may support high-speed transfer of large volume of data (enhanced mobile broadband (eMBB)), minimization of power consumption for a terminal and massive access by a large number of terminals (massive machine type communications (mMTC)), or high reliability and low latency (ultra-reliable and low latency communications (URLLC)). For example, the wireless communication module 2992 may support high frequency bands (e.g., millimeter-wave (mmWave) bands) to achieve a high data rate. The wireless communication module 2992 may support various technologies for securing performance in high frequency bands, such as beamforming, massive multiple-input and multiple-output (MIMO), full dimensional MIMO (FD-MIMO), array antennas, analog beam-forming, or large-scale antennas. The wireless communication module 2992 may support various requirements dictated for the electronic device 2901, an external electronic device (e.g., the electronic device 2904), or a network system (e.g., the second network 2999). According to an embodiment, the wireless communication module 2992 may support a peak data rate (e.g., 20 gigabits per second (Gbps) or more) for realizing eMBB, a loss coverage (e.g., up to 164 decibels (dB) for realizing mMTC, or user plane (U-plane) latency for realizing URLLC (e.g., downlink (DL) and uplink (UL) latency of 0.5 ms or less or round trip latency of 1 ms or less).

The antenna module 2997 may transmit or receive signals or power to or from the outside (e.g., an external electronic device). According to an embodiment, the antenna module 2997 may include an antenna including a radiating element composed of a conductive material or a conductive pattern formed on a substrate (e.g., a printed circuit board (PCB)). According to an embodiment, the antenna module 2997 may include a plurality of antennas (e.g., an array antenna). In this case, at least one antenna suitable for a communication method used in the communication network, such as the first network 2998 or the second network 2999, may be selected by, for example, the communication module 2990 from among the plurality of antennas. A signal or power may be transmitted or received between the communication module 2990 and an external electronic device via the selected at least one antenna. According to an embodiment, a component (e.g., a radio frequency integrated circuit (RFIC)) other than the radiating element may be additionally formed as a part of the antenna module 2997.

According to various embodiments, the antenna module 2997 may form an mmWave antenna module. According to an embodiment, the mmWave antenna module may include a PCB, an RFIC disposed on or adjacent to a first surface (e.g., a bottom surface) of the PCB and capable of supporting a specified high frequency band (e.g., an mmWave band), and a plurality of antennas (e.g., array antenna) disposed on or adjacent to a second surface (e.g., a top surface or a side) of the PCB and capable of transmitting or receiving signals in the specified high frequency band.

At least some of the components may be connected to each other and exchange signals (e.g., commands or data) with each other by using a communication scheme between peripheral devices (e.g. via a bus, general-purpose input and output (GPIO), serial peripheral interface (SPI), or Mobile Industry Processor Interface (MIPI)).

According to an embodiment, commands or data may be transmitted or received between the electronic device 2901 and the external electronic device 2904 via the server 2908 connected to the second network 2999. Each of the external electronic devices 2902 and 2404 may be a device of the same type as or a different type from the electronic device 2901. According to an embodiment, all or some of operations performed by the electronic device 2901 may be performed by one or more of the external electronic devices 2902, 2904, and 2908. For example, when the electronic device 2901 needs to perform a certain function or service automatically or in response to a request from a user or another device, the electronic device 2901 may request the one or more external electronic devices to perform at least a part of the function or service instead of or in addition to performing the function or service on its own. The one or more external electronic devices receiving the request may perform at least a part of the requested function or service, or an additional function or service related to the request, and transmit a result of the performing to the electronic device 2901. The electronic device 2901 may provide the result as at least part of a response to the request with or without further processing of the result. To this end, for example, cloud computing, distributed computing, mobile edge computing (MEC), or client-server computing technology may be used. The electronic device 2901 may provide ultra-low latency services by using, for example, distributed computing or mobile edge computing. In another embodiment, the external electronic device 2904 may include an Internet of things (IoT) device. The server 2908 may be an intelligent server using machine learning and/or neural networks. According to an embodiment, the external electronic device 2904 or the server 2908 may be included in the second network 2999. The electronic device 2901 may be applied to intelligent services (e.g., smart homes, smart cities, smart cars, or health care) based on 5G communication technology and IoT-related technology.

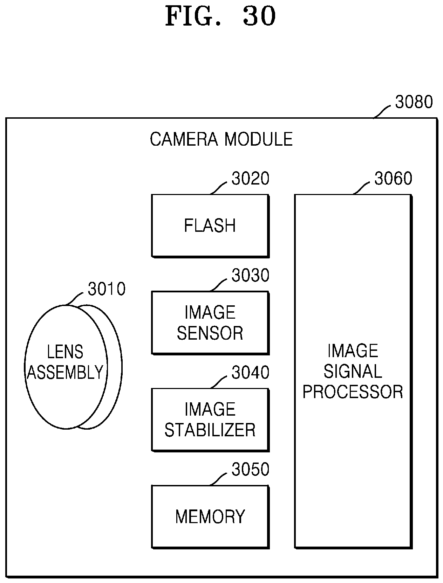

FIG. 30 is a block diagram illustrating a camera module according to an embodiment of the present disclosure.

Referring to FIG. 30, the camera module 3080 may include a lens assembly 3010, a flash 3020, an image sensor 3030, an image stabilizer 3040, a memory 3050 (e.g., buffer memory), or an image signal processor 3060.

The image sensor 3030 of FIG. 30 may correspond to the image sensor 230 of FIG. 2.

The lens assembly 3010 may collect light emitted from an object of which image is to be captured. The lens assembly 3010 may include one or more lenses. According to an embodiment, the camera module 2980 may include a plurality of lens assemblies 3010. In this case, the camera module 2980 may form, for example, a dual camera, a 360-degree camera, or a spherical camera. Some of the plurality of lens assemblies 3010 may have the same lens properties (e.g., angle of view, focal length, autofocus, f- number, or optical zoom), or at least one of the lens assemblies may have one or more lens properties that are different from the lens properties of the other lens assemblies. The lens assembly 3010 may include, for example, a wide-angle lens or a telephoto lens.

The flash 3020 may emit light used to enhance light emitted or reflected from the object. According to an embodiment, the flash 3020 may include one or more LEDs (e.g., red-green-blue (RGB) LEDs, white LEDs, infrared LEDs, or ultraviolet LEDs), or a xenon lamp. The image sensor 3030 may obtain an image corresponding to the object by converting light emitted or reflected from the object and transmitted through the lens assembly 3010 into electrical signals. According to an embodiment, the image sensor 3030 may include one image sensor selected from among image sensors having different properties, such as an RGB sensor, a black and white (BW) sensor, an infrared sensor, or an ultraviolet sensor, a plurality of image sensors having the same properties, or a plurality of image sensors having different properties. Each of the image sensors included in the image sensor 3030 may be implemented using, for example, a CCD sensor or a complementary metal oxide semiconductor (CMOS) sensor.

In response to movement of the camera module 2980 or the electronic device 2901 including the same, the image stabilizer 3040 may move at least one lens included in the lens assembly 3010 or the image sensor 3030 in a specific direction or control operating characteristics of the image sensor 3030 (e.g., adjust read-out timing, etc.). This compensates for at least some of the negative effects of the above movement on an image being captured. According to an embodiment, the image stabilizer 3040 may detect such movement of the camera module 2980 or the electronic device 2901 by using a gyro sensor (not shown) or an acceleration sensor (not shown) located inside or outside of the camera module 2980. According to an embodiment, the image stabilizer 3040 may be implemented as, for example, an optical image stabilizer. The memory 3050 may at least temporarily store at least a portion of an image obtained through the image sensor 3030 for a next image processing task. For example, when image acquisition is delayed due to a shutter, or when a plurality of images are obtained at high speed, an obtained original image (e.g., a Bayer-patterned image or a high-resolution image) is stored in the memory 3050, and a corresponding copy image (e.g., a low-resolution image) may be previewed via the display module 2960 that is a display device. Thereafter, when a specified condition is met (e.g., a user input or a system command), at least a portion of the original image stored in the memory 3050 may be obtained and processed, for example, by the image signal processor 3060. According to an embodiment, the memory 3050 may be configured as at least a portion of the memory 2930, or as a separate memory that operates independently of the memory 2930.

The image signal processor 3060 may perform one or more image processing operations on an image obtained via the image sensor 3030 or an image stored in the memory 3050. The one or more image processing operations may include, for example, depth map generation, 3D modeling, panorama generation, feature point extraction, image synthesis, or image compensation (e.g., noise reduction, resolution adjustment, brightness adjustment, blurring, sharpening, or softening). Additionally or alternatively, the image signal processor 3060 may perform control (e.g., exposure time control, or read-out timing control, etc.) for at least one of the components included in the camera module 2980 (e.g., the image sensor 3030). The image processed by the image signal processor 3060 may be stored back in the memory 3050 for further processing, or may be provided to a component outside of the camera module 2980 (e.g., the memory 2930, the display module 2960, the electronic device 2902, the electronic device 2904, or the server 2908). In an embodiment, the image signal processor 3060 may be configured as at least a portion of the processor 2920, or may be configured as a separate processor operating independently of the processor 2920. When the image signal processor 3060 is configured as a separate processor from the processor 2920, at least one image processed by the image signal processor 3060 may be displayed via the display module 2960 as it is or after undergoing further image processing by the processor 2920.

According to an embodiment, the electronic device 2901 may include a plurality of camera modules 2980, each having different properties or functions. In this case, for example, at least one of the plurality of camera modules 2980 may be a wide-angle camera, and at least another may be a telephoto camera. Similarly, at least one of the plurality of camera modules 2980 may be a front camera, and at least another may be a rear camera.

As used in various embodiments of this document, the term "module" may include a unit implemented in hardware, software, or firmware, and may be used interchangeably with another term such as logic, logic block, component, or circuitry. A module may be an integrally formed component, or a minimum unit or a part of the component configured to perform one or more functions. For example, according to an embodiment, the module may be implemented in a form of an application-specific integrated circuit (ASIC).

Various embodiments set forth herein may be implemented as software (e.g., a program) including one or more instructions stored in a storage medium that is readable by a machine (e.g., the electronic device 100). For example, a processor of the machine (e.g., the electronic device 100) may call at least one of the stored one or more instructions from the storage medium and execute the called at least one instruction. This enables the machine to be operated to perform at least one function according to the called at least one instruction. The one or more instructions may include code generated by a complier or code executable by an interpreter. The machine-readable storage medium may be provided in the form of a non-transitory storage medium. In this regard, the term 'non-transitory' only means that the storage medium is a tangible device and does not include a signal (e.g., an electromagnetic wave), and the term does not differentiate between where data is semi-permanently stored in the storage medium and where the data is temporarily stored in the storage medium.

According to an embodiment, methods according to various embodiments set forth herein may be included in a computer program product when provided. The computer program product may be traded, as a product, between a seller and a buyer. The computer program product may be distributed in the form of a machine-readable storage medium (e.g., compact disc ROM (CD-ROM)) or distributed (e.g., downloaded or uploaded) on-line via an application store or directly between two user devices (e.g., smartphones). For online distribution, at least a part of the computer program product may be at least transiently stored or temporally generated in the machine-readable storage medium such as memory of a server of a manufacturer, a server of an application store, or a relay server.

According to an aspect of the present disclosure, there is provided a method of controlling an electronic device including a camera. The method of controlling the electronic device includes obtaining an image frame from the camera. Furthermore, the method of controlling the electronic device includes identifying whether a current frame rate is lower than a reference frame rate. Furthermore, the method of controlling the electronic device includes, based on determining that the current frame rate is lower than the reference frame rate, identifying whether a brightness value of the image frame obtained from an image sensor is lower than a reference brightness value. Furthermore, the method of controlling the electronic device includes, based on determining that the brightness value of the image frame is lower than the reference brightness value, determining whether the camera corresponds to a first state in which the camera is blocked by an obstacle. Furthermore, the method of controlling the electronic device includes, based on determining that the camera corresponds to the first state, changing exposure settings of the camera to first exposure settings.

Furthermore, according to an embodiment of the present disclosure, the method of controlling the electronic device further includes, based on determining that the brightness value of the obtained image frame is higher than or equal to the reference brightness value, setting the frame rate to a second frame rate, obtaining an image frame at the second frame rate, and recalculating exposure settings of the camera based on the image frame obtained at the second frame rate. Furthermore, according to an embodiment of the present disclosure, the method of controlling the electronic device further includes, based on determining that the camera does not correspond to the first state, setting the frame rate to a second frame rate, obtaining an image frame at the second frame rate, and recalculating exposure settings of the camera based on the image frame obtained at the second frame rate.

Furthermore, according to an embodiment of the present disclosure, the identifying of whether the brightness value of the image frame is lower than the reference brightness value includes obtaining a first image frame from the image sensor based on determining that the camera operates at a frame rate lower than the reference frame rate, and identifying whether a brightness value of the obtained first image frame is lower than the reference brightness value.

Furthermore, according to an embodiment of the present disclosure, the brightness value of the image frame corresponds to an average of brightness values of all pixels in the image frame.

Furthermore, according to an embodiment of the present disclosure, the method of controlling the electronic device further includes, each time an image frame is obtained from the image sensor, storing exposure settings of the camera and a brightness value of the image frame in a buffer of the camera. Furthermore, the changing of the exposure settings of the camera to the first exposure settings includes determining, based on determining that the camera corresponds to the first state, whether the brightness value of the image frame stored in the buffer is a valid value, changing the exposure settings of the camera to the first exposure settings based on determining that the brightness value of the image frame stored in the buffer is valid, and increasing the frame rate of the camera to the second frame rate based on determining that the brightness value of the image frame stored in the buffer is invalid.

Furthermore, according to an embodiment of the present disclosure, the determining of whether the brightness value of the image frame is a valid value includes determining whether brightness values of a plurality of image frames stored in the buffer are stable based on a distribution of the brightness values of the plurality of image frames, determining whether the brightness values of the plurality of image frames stored in the buffer exceed a minimum brightness value, and determining that exposure settings and the brightness value of the image frame are valid based on determining that the brightness values of the plurality of image frames are stable and exceed the minimum brightness value.

Furthermore, according to an embodiment of the present disclosure, the method of controlling the electronic device further includes, each time an image frame is obtained from the image sensor, storing exposure settings of the camera and a brightness value of the image frame in the buffer of the camera. Furthermore, the changing of the exposure settings of the camera to the first exposure settings includes determining, as the first exposure settings, exposure settings for an image frame corresponding to a highest brightness value among exposure settings for a plurality of image frames stored in the buffer.

Furthermore, according to an embodiment of the present disclosure, the method of controlling the electronic device further includes, each time an image frame is obtained from the image sensor, storing exposure settings of the camera and a brightness value of the image frame in the buffer of the camera.

Furthermore, according to an embodiment of the present disclosure, the determining of the first exposure settings includes calculating an average of the brightness values of the plurality of frames stored in the buffer, and determining, as the first exposure settings, exposure settings for an image frame having a brightness value closest to the average of the brightness values.

Furthermore, according to an embodiment of the present disclosure, the determining of whether the camera corresponds to the first state includes determining whether the camera corresponds to the first state based on a detection value of a proximity sensor located around a lens of the camera.

Furthermore, according to an embodiment of the present disclosure, the determining of whether the camera corresponds to the first state includes obtaining a depth map from a ToF camera located around a lens of the camera, and determining, based on determining that a minimum depth value in the depth map is less than a reference depth value, that the camera corresponds to the first state in which the camera is blocked by the obstacle.

Furthermore, according to an embodiment of the present disclosure, the determining of whether the camera corresponds to the first state includes obtaining, based on a detection value of a Hall sensor, state information of a protective case coupled to the electronic device and having a folded state in which a front side of the electronic device is covered and an open state in which the front side of the electronic device is opened, and determining that the camera corresponds to the first state based on determining that the state information of the protective case corresponds to the folded state.

Furthermore, according to an embodiment of the present disclosure, the determining of whether the camera corresponds to the first state includes determining that the camera corresponds to the first state based on determining that a focus state of the camera is out of focus.

Furthermore, according to an embodiment of the present disclosure, the determining of whether the camera corresponds to the first state includes determining whether the camera corresponds to the first state, based on scene recognition of the obtained image frame.

Furthermore, according to an embodiment of the present disclosure, the method of controlling the electronic device further includes increasing the frame rate of the camera to a preset first frame rate based on determining that the camera corresponds to the first state.

Furthermore, according to an embodiment of the present disclosure, the determining of whether the camera corresponds to the first state includes obtaining a detection value of an acceleration sensor of the electronic device based on determining that the brightness value of the obtained image frame is lower than the reference brightness value, determining whether the electronic device is placed in a fixed position with a first side of the electronic device on which the camera is disposed being in contact with another object, and determining that the camera corresponds to the first state when the first side of the electronic device on which the camera is disposed is in contact with the other object.

Furthermore, according to an embodiment of the present disclosure, the electronic device is a foldable device. Furthermore, the camera is disposed on an interior surface of the foldable device, which is located inside the foldable device while in a folded state. Furthermore, the determining of whether the camera corresponds to the first state includes, when a folding angle of the foldable device is less than a reference angle value, determining that the camera corresponds to the first state.

Furthermore, according to an embodiment of the present disclosure, the method of controlling the electronic device further includes determining a first ambient brightness value based on a detection value of an illuminance sensor of the electronic device, obtaining exposure settings corresponding to the first ambient brightness value from a first database storing exposure settings according to an ambient brightness value, and determining the exposure settings obtained from the first database as the first exposure settings.

Furthermore, according to an embodiment of the present disclosure, the exposure settings include a shutter speed, an aperture value, and an ISO value.

According to various embodiments, each component (e.g., a module or a program) of the above-described components may include a single entity or a plurality of entities, some of which may be separately disposed in other components. According to various embodiments, one or more of the above-described components or one or more operations may be omitted, or one or more other components or operations may be added. Alternatively or additionally, a plurality of components (e.g., modules or programs) may be integrated into a single component. In such a case, the integrated component may perform one or more functions of each of the plurality of components in the same or similar manner as they are performed by a corresponding one of the plurality of components before the integration. According to various embodiments, operations performed by a module, a program, or another component may be carried out sequentially, in parallel, iteratively, or heuristically, or one or more of the operations may be executed in a different order or omitted, or one or more other operations may be added.

## Claims

1. A method of controlling an electronic device including a camera, the method comprising:
obtaining an image frame from the camera;
identifying whether a current frame rate is lower than a reference frame rate;
based on determining that the current frame rate is lower than the reference frame rate, identifying whether a brightness value of the image frame obtained from an image sensor is lower than a reference brightness value;
based on determining that the brightness value of the image frame is lower than the reference brightness value, determining whether the camera corresponds to a first state in which the camera is blocked by an obstacle; and
based on determining that the camera corresponds to the first state, changing exposure settings of the camera to first exposure settings.

2. The method of claim 1, further comprising:
based on determining that the brightness value of the obtained image frame is higher than or equal to the reference brightness value,
setting the frame rate to a second frame rate;
obtaining an image frame at the second frame rate; and
recalculating exposure settings of the camera based on the image frame obtained at the second frame rate, and
based on determining that the camera does not correspond to the first state,
setting the frame rate to a second frame rate;
obtaining an image frame at the second frame rate; and
recalculating exposure settings of the camera based on the image frame obtained at the second frame rate.

3. The method of claim 1 or 2, wherein
the identifying of whether the brightness value of the image frame is lower than the reference brightness value comprises:
obtaining a first image frame from the image sensor based on determining that the camera operates at a frame rate lower than the reference frame rate; and
identifying whether a brightness value of the obtained first image frame is lower than the reference brightness value.

4. The method of any one of claims 1 to 3, wherein the brightness value of the image frame corresponds to an average of brightness values of all pixels in the image frame.

5. The method of any one of claims 1 to 4, further comprising,
each time an image frame is obtained from the image sensor, storing exposure settings of the camera and a brightness value of the image frame in a buffer of the camera,
wherein the changing of the exposure settings of the camera to the first exposure settings comprises:
determining, based on determining that the camera corresponds to the first state, whether the brightness value of the image frame stored in the buffer is a valid value;
changing the exposure settings of the camera to the first exposure settings based on determining that the brightness value of the image frame stored in the buffer is valid; and
increasing the frame rate of the camera to the second frame rate based on determining that the brightness value of the image frame stored in the buffer is invalid.

6. The method of any one of claims 1 to 5, further comprising,
each time an image frame is obtained from the image sensor, storing exposure settings of the camera and a brightness value of the image frame in the buffer of the camera,
wherein the changing of the exposure settings of the camera to the first exposure settings comprises
determining, as the first exposure settings, exposure settings for an image frame corresponding to a highest brightness value among exposure settings for a plurality of image frames stored in the buffer.

7. The method of any one of claims 1 to 6, further comprising,
each time an image frame is obtained from the image sensor, storing exposure settings of the camera and a brightness value of the image frame in the buffer of the camera,
wherein the determining of the first exposure settings comprises:
calculating an average of the brightness values of the plurality of frames stored in the buffer; and
determining, as the first exposure settings, exposure settings for an image frame having a brightness value closest to the average of the brightness values.

8. The method of any one of claims 1 to 7, wherein the determining of whether the camera corresponds to the first state comprises determining whether the camera corresponds to the first state based on a detection value of a proximity sensor located around a lens of the camera.

9. The method of any one of claims 1 to 8, wherein
the determining of whether the camera corresponds to the first state comprises:
obtaining a depth map from a time of flight (ToF) camera located around the lens of the camera; and
determining, based on determining that a minimum depth value in the depth map is less than a reference depth value, that the camera corresponds to the first state in which the camera is blocked by the obstacle.

10. The method of any one of claims 1 to 9, wherein
the determining of whether the camera corresponds to the first state comprises:
obtaining, based on a detection value of a Hall sensor, state information of a protective case coupled to the electronic device and having a folded state in which a front side of the electronic device is covered and an open state in which the front side of the electronic device is opened; and
determining that the camera corresponds to the first state based on determining that the state information of the protective case corresponds to the folded state.

11. The method of any one of claims 1 to 10, further comprising increasing the frame rate of the camera to a preset first frame rate based on determining that the camera corresponds to the first state.

12. The method of any one of claims 1 to 11, wherein
the determining of whether the camera corresponds to the first state comprises:
obtaining a detection value of an acceleration sensor of the electronic device, based on determining that the brightness value of the obtained image frame is lower than the reference brightness value;
determining whether the electronic device is placed in a fixed position with a first side of the electronic device on which the camera is disposed being in contact with another object; and
determining that the camera corresponds to the first state when the first side of the electronic device on which the camera is disposed is in contact with the other object.

13. The method of any one of claims 1 to 12, wherein
the electronic device is a foldable device,
the camera is disposed on an interior surface of the foldable device, which is located inside the foldable device while in a folded state, and
the determining of whether the camera corresponds to the first state comprises,
when a folding angle of the foldable device is less than a reference angle value, determining that the camera corresponds to the first state.

14. An electronic device (100) comprising:
a camera (110) including an image sensor (230);
a memory (220) storing at least one instruction; and
at least one processor (210) connected to the memory (220),
wherein the at least one processor (210) is configured to execute the at least one instruction to
obtain an image frame from the camera (110),
identify whether a current frame rate is lower than a reference frame rate, based on determining that the current frame rate is lower than the reference frame rate, identify whether a brightness value of the image frame obtained from the image sensor (230) is lower than a reference brightness value,
based on determining that the brightness value of the image frame is lower than the reference brightness value, determine whether the camera (110) corresponds to a first state in which the camera (110) is blocked by an obstacle, and
based on determining that the camera (110) corresponds to the first state, change exposure settings of the camera (110) to first exposure settings.

15. A computer-readable recording medium having recorded thereon a program for performing the method of any one of claims 1 to 13 on a computer.
